# EUROPEAN PATENT APPLICATION

(11) **EP 4 694 215 A1**
(43) Date of publication of application: **11.02.2026**
(21) Application number: 24796180.8
(22) Date of filing: 25.04.2024
(51) Int. Cl.: H04W 4/02

(54) **COMMUNICATION SYSTEM, COMMUNICATION PROCESSING METHOD, AND RELATED DEVICE**

(30) Priority: 28.04.2023 CN 202310490871
(71) Applicant: Huawei Technologies Co., Ltd., Shenzhen, Guangdong 518129 (CN)
(72) Inventor: CHENG, Xingqing, Shenzhen, Guangdong 518129 (CN); LI, Dejian, Shenzhen, Guangdong 518129 (CN); GAO, Lei, Shenzhen, Guangdong 518129 (CN); WANG, Jian, Shenzhen, Guangdong 518129 (CN); LI, Ze, Chongqing 400065 (CN)
(74) Representative: MERH-IP Matias Erny Reichl Hoffmann Patentanwälte PartG mbB
(86) International application number: PCT/CN2024/089830
(87) International publication number: WO 2024/222804

(57) **Abstract**

A communication system, a communication processing method, and a related apparatus are provided. The communication system includes a first node and a second node. The first node is configured to send a first OFDM symbol to the second node, where a sending start time point of the first OFDM symbol is a first time point. The second node is configured to receive the first OFDM symbol, where a receiving start time point of the first OFDM symbol is a second time point. The second node is configured to start to send a second OFDM symbol to the first node at a third time point, where there is an interval of first preset duration between the third time point and the second time point. The first node is configured to start to receive the second OFDM symbol at a fourth time point, where the fourth time point serves as a receiving start time point at which the first node receives the second OFDM symbol, and there is an interval of second preset duration between the fourth time point and the first time point. The first OFDM symbol and the second OFDM symbol are used for ranging, angle measurement, or positioning. According to embodiments of this application, measurement precision can be improved.

## Description

This application claims priority to Chinese Patent Application No. 202310490871.5, filed with the China National Intellectual Property Administration on April 28, 2023, and entitled "COMMUNICATION SYSTEM, COMMUNICATION PROCESSING METHOD, AND RELATED APPARATUS", which is incorporated herein by reference in its entirety.

### TECHNICAL FIELD

This application relates to the field of communication technologies, and in particular, to a communication system, a communication processing method, and a related apparatus.

### BACKGROUND

With continuous development of global communication technologies, wireless communication technologies have surpassed wired communication technologies in development speed and application, and present a booming development trend. Smart devices such as smart transportation devices, smart home devices, and robots are gradually entering daily life of people. The wireless communication technologies can implement wireless ranging, angle measurement, or positioning, for example, be applied to indoor positioning, passive entry passive start, asset management, logistics, or the like.

An orthogonal frequency-division multiplexing (orthogonal frequency-division multiplexing, OFDM) signal is widely applied to an existing wireless communication system, for example, a SparkLink (SparkLink) system, a wireless fidelity (wireless fidelity, Wi-Fi) system, or a long term evolution (long term evolution, LTE) system. However, an OFDM signal-based ranging, angle measurement, or positioning technology is difficult to implement. A main reason is that a synchronization phase error and the like are introduced in an OFDM signal processing process. Due to these phase errors, an error of a ranging result, an angle measurement result, or a positioning result is large, and precision required for ranging, angle measurement, or positioning cannot be achieved.

### SUMMARY

This application provides a communication system, a communication processing method, and a related apparatus, to improve measurement precision of ranging, angle measurement, or positioning.

According to a first aspect, this application provides a communication system. The communication system includes a first node and a second node.

The first node is configured to send a first OFDM symbol to the second node, where a sending start time point of the first OFDM symbol is a first time point.

The second node is configured to receive the first OFDM symbol, where a receiving start time point of the first OFDM symbol is a second time point.

The second node is configured to start to send a second OFDM symbol to the first node at a third time point, where there is an interval of first preset duration between the third time point and the second time point.

The first node is configured to start to receive the second OFDM symbol at a fourth time point, where the fourth time point serves as a receiving start time point at which the first node receives the second OFDM symbol, and there is an interval of second preset duration between the fourth time point and the first time point.

The first OFDM symbol and the second OFDM symbol are used for ranging, angle measurement, or positioning.

Optionally, the first preset duration is equal to the second preset duration.

Compared with the conventional technology in which any point in a cyclic prefix (CP) of an OFDM symbol is used as a receiving start point of the OFDM symbol, in this solution, there is an interval of fixed duration (namely, the second preset duration) between sending a signal by the first node and receiving a signal by the first node, and the second preset duration is calculated from a sending start time point (namely, the first time point) of an OFDM symbol (that is, sending the first OFDM symbol) sent by the first node, to limit a receiving start point of an OFDM symbol (that is, receiving the second OFDM symbol) received by the first node. In other words, the start point of the received OFDM symbol can be uniquely determined. In addition, there is an interval of fixed duration (namely, the first preset duration) between receiving a signal by the second node and sending a signal by the second node, and the first preset duration is calculated from a receiving start time point (namely, the second time point) of an OFDM symbol (that is, receiving the first OFDM symbol) received by the second node, to limit a sending start point of an OFDM symbol (that is, sending the second OFDM symbol) sent by the second node. To be specific, a synchronization error between the first node and the second node is reduced by using the fixed first preset duration and the fixed second preset duration, that is, a phase offset caused by a synchronization error between a transmitter and a receiver is reduced. On this basis, corresponding channel information in the OFDM symbol is extracted to perform channel estimation, so as to calculate a result of ranging, angle measurement, or positioning, thereby improving precision of the ranging, angle measurement, or positioning.

In addition, optionally, the first OFDM symbol and the second OFDM symbol are used to obtain a measurement result of the ranging, angle measurement, or positioning, and the first preset duration and the second preset duration are used to correct the measurement result. In this implementation, due to an error existing in a device or system, for example, an inherent delay of a transceiver channel or a system processing delay, regardless of whether the first preset duration and the second preset duration are set to be the same (for example, the first preset duration and the second preset duration may be specified in a protocol, configured by a communication system, by default, or specified in another manner), during actual implementation, there may be a deviation between the first preset duration and the second preset duration. In this case, during ranging, positioning, and angle measurement, the first preset duration and the second preset duration that are set may be used to implement calibration, pre-training, or the like, to reduce or eliminate impact of such a deviation. If the first preset duration and the second preset duration are set to be different, the system error may be eliminated together with or separately eliminated from an error caused by the first preset duration and the second preset duration that are set to be different. Such deviation correction can reduce a deviation, and improve measurement precision.

In a possible implementation, the first OFDM symbol includes a first prefix and first valid data, where
the first time point serves as a moment at which the first node sends start point data of the first prefix, or the first time point serves as a moment at which the first node sends start point data of the first valid data; and
the second time point serves as a moment at which the second node receives the start point data of the first prefix, or the second time point serves as a moment at which the second node receives the start point data of the first valid data; and/or
the second OFDM symbol includes a second prefix and second valid data, where the third time point serves as a moment at which the second node sends start point data of the second prefix, and the fourth time point serves as a moment at which the first node receives the start point data of the second prefix.

In this solution, the sending start time point (namely, the first time point) and the receiving start time point (namely, the second time point) of the OFDM symbol may be flexibly selected, and a used sending start time point and/or receiving start time point may be determined based on different application requirements. Therefore, an application scenario is wide, and applicability is high.

In a possible implementation, the second OFDM symbol includes the second prefix and the second valid data, and the fourth time point serves as the moment at which the first node receives the start point data of the second prefix.

After the first node is configured to start to receive the second OFDM symbol at the fourth time point, the following is further included:

The first node is configured to start to collect the second valid data after third preset duration starting from the fourth time point elapses, where the third preset duration is duration of a length of the second prefix.

In this solution, if the receiving start point of the received OFDM symbol is determined as a moment at which start point data of a prefix of the OFDM symbol is received, after a signal starts to be received, valid data is collected after duration of a length of the prefix elapses, that is, an OFDM signal collected after the prefix is removed is precise, thereby improving precision of subsequent channel estimation.

In a possible implementation, the first OFDM symbol includes the first prefix and the first valid data, and the first prefix is a cyclic prefix of the first OFDM symbol, or the first prefix is the first valid data; and/or
the second OFDM symbol includes the second prefix and the second valid data, and the second prefix is a cyclic prefix of the second OFDM symbol, or the second prefix is the second valid data.

In this solution, the prefix of the OFDM symbol may be a cyclic prefix, valid data of the OFDM symbol, or the like. In other words, this solution is applicable to communication measurement of a plurality of OFDM symbols with different composition structures, and has a wide application scenario and high applicability.

In a possible implementation, a sending start time point that is of the second OFDM symbol and that is determined by the second node is a fifth time point, and the receiving start time point that is of the second OFDM symbol and that is determined by the first node is a sixth time point; and the method further includes:

The first node is configured to start to send a third OFDM symbol to the second node at a seventh time point, where there is an interval of fourth preset duration between the seventh time point and the sixth time point; and
the second node is configured to start to receive the third OFDM symbol at an eighth time point, where there is an interval of fifth preset duration between the eighth time point and the fifth time point.

The second OFDM symbol and the third OFDM symbol are used for ranging, angle measurement, or positioning.

In this solution, the second node and the first node may perform a plurality of OFDM symbol sending and receiving interactions. For each sending and receiving interaction, refer to the implementation in the first aspect. A final measurement result is determined based on measurement results of the plurality of OFDM symbol sending and receiving interactions. For example, processing like averaging or weighted averaging is performed on the plurality of measurement results, so that the finally obtained measurement result is more accurate and has higher precision.

In a possible implementation, the first node is further configured to determine a first channel estimation result based on the second OFDM symbol; and the first node is further configured to perform ranging, angle measurement, or positioning based on the first channel estimation result; or the first node is further configured to send the first channel estimation result to a third node in the communication system, for the third node to perform ranging, angle measurement, or positioning based on the first channel estimation result.

In a possible implementation, the second node is further configured to determine a second channel estimation result based on the first OFDM symbol; and the second node is further configured to perform ranging, angle measurement, or positioning based on the second channel estimation result; or the second node is further configured to send the second channel estimation result to a fourth node in the communication system, for the fourth node to perform ranging, angle measurement, or positioning based on the second channel estimation result.

In a possible implementation, the first node is further configured to determine a first channel estimation result based on the second OFDM symbol; and the second node is further configured to determine a second channel estimation result based on the first OFDM symbol. The first channel estimation result and the second channel estimation result are used to obtain the measurement result of the ranging, angle measurement, or positioning.

In the foregoing two possible implementations, channel estimation and calculation processing of the final measurement result may be implemented by nodes (for example, the first node or the second node) that perform OFDM symbol interaction, or may be implemented by another node (for example, the third node or the fourth node) in the communication system. Implementation is flexible, so that an application scenario is wide, and applicability is high.

According to a second aspect, this application provides a communication processing method. The method includes:

A first node sends a first OFDM symbol to a second node, where a sending start time point of the first OFDM symbol is a first time point; and
the first node starts to receive a second OFDM symbol from the second node at a second time point, where there is an interval of first preset duration between the second time point and the first time point, and the second time point serves as a receiving start time point at which the first node receives the second OFDM symbol.

The first OFDM symbol and the second OFDM symbol are used for ranging, angle measurement, or positioning.

Compared with the conventional technology in which any point in a cyclic prefix (CP) of an OFDM symbol is used as a receiving start point of the OFDM symbol, in this solution, there is an interval of fixed duration (namely, the first preset duration) between sending a signal by the first node and receiving a signal by the first node, and the first preset duration is calculated from a sending start time point (namely, the first time point) of an OFDM symbol (that is, sending the first OFDM symbol) sent by the first node, to limit a receiving start point of an OFDM symbol (that is, receiving the second OFDM symbol) received by the first node. In other words, the start point of the received OFDM symbol can be uniquely determined. To be specific, a synchronization error between the first node and the second node is reduced by using the fixed first preset duration, that is, a phase offset caused by a synchronization error between a transmitter and a receiver is reduced. On this basis, corresponding channel information in the OFDM symbol is extracted to perform channel estimation, so as to calculate a result of ranging, angle measurement, or positioning, thereby improving precision of the ranging, angle measurement, or positioning.

In a possible implementation, the first OFDM symbol includes a first prefix and first valid data, where the first time point serves as a moment at which the first node sends start point data of the first prefix, or the first time point serves as a moment at which the first node sends start point data of the first valid data; and/or
the second OFDM symbol includes a second prefix and second valid data, where a fourth time point serves as a moment at which the first node receives start point data of the second prefix.

In a possible implementation, the second OFDM symbol includes the second prefix and the second valid data, and the fourth time point serves as the moment at which the first node receives the start point data of the second prefix.

After the first node starts to receive the second OFDM symbol from the second node at the second time point, the method further includes:

The first node starts to collect the second valid data after second preset duration starting from the second time point elapses, where the second preset duration is duration of a length of the second prefix.

In a possible implementation, the first OFDM symbol and the second OFDM symbol are used to obtain a measurement result of the ranging, angle measurement, or positioning, and the first preset duration is used to correct the measurement result.

In a possible implementation, the first OFDM symbol includes the first prefix and the first valid data, and the first prefix is a cyclic prefix of the first OFDM symbol, or the first prefix is the first valid data; and/or
the second OFDM symbol includes the second prefix and the second valid data, and the second prefix is a cyclic prefix of the second OFDM symbol, or the second prefix is the second valid data.

In a possible implementation, the method further includes: The first node determines a channel estimation result based on the second OFDM symbol; and
the first node performs ranging, angle measurement, or positioning based on the channel estimation result; or the first node sends the channel estimation result to a third node, for the third node to perform ranging, angle measurement, or positioning based on the channel estimation result.

According to a third aspect, this application provides a communication processing method. The method includes:

A second node receives a first OFDM symbol from a first node, where a sending start time point that is of the first OFDM symbol and that is determined by the second node is a first time point; and
the second node starts to send a second OFDM symbol to the first node at a second time point, where there is an interval of first preset duration between the second time point and the first time point.

The first OFDM symbol and the second OFDM symbol are used for ranging, angle measurement, or positioning.

Compared with the conventional technology in which any point in a cyclic prefix (CP) of an OFDM symbol is used as a receiving start point of the OFDM symbol, in this solution, there is an interval of fixed duration (namely, the first preset duration) between receiving a signal by the second node and sending a signal by the second node, and the first preset duration is calculated from a receiving start time point (namely, the second time point) of an OFDM symbol (that is, receiving the first OFDM symbol) received by the second node, to limit a sending start point of an OFDM symbol (that is, sending the second OFDM symbol) sent by the second node. To be specific, a synchronization error between the first node and the second node is reduced by using the fixed first preset duration, that is, a phase offset caused by a synchronization error between a transmitter and a receiver is reduced. On this basis, corresponding channel information in the OFDM symbol is extracted to perform channel estimation, so as to calculate a result of ranging, angle measurement, or positioning, thereby improving precision of the ranging, angle measurement, or positioning.

In a possible implementation, the first OFDM symbol includes a first prefix and first valid data, where the first time point serves as a moment at which the second node receives start point data of the first prefix, or the first time point serves as a moment at which the second node receives start point data of the first valid data; and/or
the second OFDM symbol includes a second prefix and second valid data, where the second time point serves as a moment at which the second node sends start point data of the second prefix.

In a possible implementation, the first OFDM symbol and the second OFDM symbol are used to obtain a measurement result of the ranging, angle measurement, or positioning, and the first preset duration is used to correct the measurement result.

In a possible implementation, a sending start time point that is of the second OFDM symbol and that is determined by the second node is a third time point; and after the second node starts to send the second OFDM symbol to the first node at the second time point, the method further includes:

The second node starts to receive a third OFDM symbol from the first node at a fourth time point, where there is an interval of second preset duration between the fourth time point and the third time point, and the fourth time point serves as a receiving start time point at which the second node receives the third OFDM symbol.

In a possible implementation, the first OFDM symbol includes the first prefix and the first valid data, and the first prefix is a cyclic prefix of the first OFDM symbol, or the first prefix is the first valid data; and
the second OFDM symbol includes the second prefix and the second valid data, and the second prefix is a cyclic prefix of the second OFDM symbol, or the second prefix is the second valid data.

In a possible implementation, the method further includes: The second node determines a channel estimation result based on the first OFDM symbol; and
the second node performs ranging, angle measurement, or positioning based on the channel estimation result; or the second node sends the channel estimation result to a third node, for the third node to perform ranging, angle measurement, or positioning based on the channel estimation result.

According to a fourth aspect, this application provides a communication node. The communication node includes:
a sending unit, configured to send a first OFDM symbol to a second node, where a sending start time point of the first OFDM symbol is a first time point; and
a receiving unit, configured to start to receive a second OFDM symbol from the second node at a second time point, where there is an interval of first preset duration between the second time point and the first time point, and the second time point serves as a receiving start time point at which the communication node receives the second OFDM symbol.

The first OFDM symbol and the second OFDM symbol are used for ranging, angle measurement, or positioning.

In a possible implementation, the first OFDM symbol includes a first prefix and first valid data, where the first time point serves as a moment at which the communication node sends start point data of the first prefix, or the first time point serves as a moment at which the communication node sends start point data of the first valid data; and/or
the second OFDM symbol includes a second prefix and second valid data, where a fourth time point serves as a moment at which the communication node receives start point data of the second prefix.

In a possible implementation, the second OFDM symbol includes the second prefix and the second valid data, and the fourth time point serves as the moment at which the communication node receives the start point data of the second prefix.

The communication node further includes a collection unit configured to start to collect the second valid data after second preset duration starting from the second time point elapses, where the second preset duration is duration of a length of the second prefix.

In a possible implementation, the first OFDM symbol and the second OFDM symbol are used to obtain a measurement result of the ranging, angle measurement, or positioning, and the first preset duration is used to correct the measurement result.

In a possible implementation, the first OFDM symbol includes the first prefix and the first valid data, and the first prefix is a cyclic prefix of the first OFDM symbol, or the first prefix is the first valid data; and/or
the second OFDM symbol includes the second prefix and the second valid data, and the second prefix is a cyclic prefix of the second OFDM symbol, or the second prefix is the second valid data.

In a possible implementation, the communication node further includes a processing unit configured to: determine a channel estimation result based on the second OFDM symbol; and perform ranging, angle measurement, or positioning based on the channel estimation result.

Alternatively, after the processing unit determines the channel estimation result based on the second OFDM symbol, the sending unit is further configured to send the channel estimation result to a third node, for the third node to perform ranging, angle measurement, or positioning based on the channel estimation result.

According to a fifth aspect, this application provides a communication node. The communication node includes:
a receiving unit, configured to receive a first OFDM symbol from a first node, where a sending start time point that is of the first OFDM symbol and that is determined by the communication node is a first time point; and
a sending unit, configured to start to send a second OFDM symbol to the first node at a second time point, where there is an interval of first preset duration between the second time point and the first time point.

The first OFDM symbol and the second OFDM symbol are used for ranging, angle measurement, or positioning.

In a possible implementation, the first OFDM symbol includes a first prefix and first valid data, where the first time point serves as a moment at which the communication node receives start point data of the first prefix, or the first time point serves as a moment at which the communication node receives start point data of the first valid data; and/or
the second OFDM symbol includes a second prefix and second valid data, where the second time point serves as a moment at which the communication node sends start point data of the second prefix.

In a possible implementation, the first OFDM symbol and the second OFDM symbol are used to obtain a measurement result of the ranging, angle measurement, or positioning, and the first preset duration is used to correct the measurement result.

In a possible implementation, a sending start time point that is of the second OFDM symbol and that is determined by the communication node is a third time point.

The receiving unit is further configured to: after the sending unit starts to send the second OFDM symbol to the first node at the second time point, start to receive a third OFDM symbol from the first node at a fourth time point, where there is an interval of second preset duration between the fourth time point and the third time point, and the fourth time point serves as a receiving start time point at which the communication node receives the third OFDM symbol.

In a possible implementation, the first OFDM symbol includes the first prefix and the first valid data, and the first prefix is a cyclic prefix of the first OFDM symbol, or the first prefix is the first valid data; and
the second OFDM symbol includes the second prefix and the second valid data, and the second prefix is a cyclic prefix of the second OFDM symbol, or the second prefix is the second valid data.

In a possible implementation, the communication node further includes a processing unit configured to: determine a channel estimation result based on the first OFDM symbol; and perform ranging, angle measurement, or positioning based on the channel estimation result.

Alternatively, after the processing unit determines the channel estimation result based on the first OFDM symbol, the sending unit is further configured to send the channel estimation result to a third node, for the third node to perform ranging, angle measurement, or positioning based on the channel estimation result.

According to a sixth aspect, this application provides a communication node. The communication node includes a processor and a memory. The memory is coupled to the processor. When executing a computer program or computer instructions stored in the memory, the processor can implement the method according to any implementation of the second aspect. The communication node may further include a communication interface. The communication interface is used by the communication node to communicate with another apparatus (for example, another communication node in a same communication system). For example, the communication interface may be a transceiver, a circuit, a bus, a module, or another type of communication interface.

In a possible implementation, the communication node may include:
the memory, configured to store the computer program or the computer instructions; and
the processor, configured to: send a first OFDM symbol to a second node through the communication interface, where a sending start time point of the first OFDM symbol is a first time point; and start to receive a second OFDM symbol from the second node through the communication interface at a second time point. There is an interval of first preset duration between the second time point and the first time point, and the second time point serves as a receiving start time point at which the communication node receives the second OFDM symbol. The first OFDM symbol and the second OFDM symbol are used for ranging, angle measurement, or positioning.

It should be noted that, in this application, the computer program or the computer instructions in the memory may be pre-stored, or may be downloaded from the internet and stored when the communication node is used. A source of the computer program or the computer instructions in the memory is not specifically limited in this application. Coupling in embodiments of this application is indirect coupling or connection between units or modules, may be in an electrical form, a mechanical form, or another form, and is used for information exchange between the units or the modules.

According to a seventh aspect, this application provides a communication node. The communication node includes a processor and a memory. The memory is coupled to the processor. When executing a computer program or computer instructions stored in the memory, the processor can implement the method according to any implementation of the third aspect. The communication node may further include a communication interface. The communication interface is used by the communication node to communicate with another apparatus (for example, another communication node in a same communication system). For example, the communication interface may be a transceiver, a circuit, a bus, a module, or another type of communication interface.

In a possible implementation, the communication node may include:
the memory, configured to store the computer program or the computer instructions; and
the processor, configured to: receive a first OFDM symbol from a first node through the communication interface, where a sending start time point that is of the first OFDM symbol and that is determined by the communication node is a first time point; and start to send a second OFDM symbol to the first node through the communication interface at a second time point. There is an interval of first preset duration between the second time point and the first time point. The first OFDM symbol and the second OFDM symbol are used for ranging, angle measurement, or positioning.

It should be noted that, in this application, the computer program or the computer instructions in the memory may be pre-stored, or may be downloaded from the internet and stored when the communication node is used. A source of the computer program or the computer instructions in the memory is not specifically limited in this application. Coupling in embodiments of this application is indirect coupling or connection between units or modules, may be in an electrical form, a mechanical form, or another form, and is used for information exchange between the units or the modules.

According to an eighth aspect, this application provides a computer-readable storage medium. The computer-readable storage medium stores a computer program or computer instructions, and when the computer program or the computer instructions are executed by a processor, the method according to any implementation of the second aspect is implemented.

According to a ninth aspect, this application provides a computer-readable storage medium. The computer-readable storage medium stores a computer program or computer instructions, and when the computer program or the computer instructions are executed by a processor, the method according to any implementation of the third aspect is implemented.

According to a tenth aspect, an embodiment of this application provides a computer program product. When the computer program product is executed by a processor, the method according to any implementation of the second aspect is implemented.

According to an eleventh aspect, an embodiment of this application provides a computer program product. When the computer program product is executed by a processor, the method according to any implementation of the third aspect is implemented.

The solutions provided in the second aspect to the eleventh aspect are for implementing or collaboratively implementing the corresponding system provided in the first aspect, and therefore, can achieve beneficial effects the same as or corresponding to those of the corresponding system in the first aspect. Details are not described herein again.

### BRIEF DESCRIPTION OF DRAWINGS

FIG. 1 is a diagram of a frame structure;
FIG. 2 is a diagram of a structure of a communication system;
FIG. 3 is a diagram of a positioning scenario;
FIG. 4 is a schematic flowchart of a communication processing method;
FIG. 5 to FIG. 16 are diagrams of receiving and sending time points of an OFDM symbol; and
FIG. 17 to FIG. 20 are diagrams of structures of communication nodes.

### DESCRIPTION OF EMBODIMENTS

In embodiments of this application, "a plurality of" means two or more than two. In embodiments of this application, "and/or" is used to describe an association relationship between associated objects, and represents three relationships that may exist independently. For example, A and/or B may represent the following: Only A exists, only B exists, or both A and B exist. A description manner like "at least one piece (or at least one) of a1, a2, ..., and an" used in embodiments of this application includes a case in which any one of a1, a2, ..., and an exists alone, and also includes any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

The following first describes technical terms in embodiments of this application.

### 1. Orthogonal frequency-division multiplexing (orthogonal frequency-division multiplexing, OFDM)

OFDM is developed from multicarrier modulation (multi carrier modulation, MCM). The OFDM technology is one of implementations of a multicarrier transmission solution. Modulation and demodulation of the OFDM technology are respectively implemented based on inverse fast Fourier transform (inverse fast Fourier transform, IFFT) and fast Fourier transform (fast Fourier transform, FFT), and the OFDM technology is a multicarrier transmission solution with lowest implementation complexity and widest application.

A main idea of OFDM is to divide a channel into several orthogonal sub-channels, convert a high-speed data signal into parallel low-speed data sub-streams, and modulate the parallel low-speed data sub-streams to the sub-channels for transmission. Orthogonal signals may be separated at a receive end, which can reduce mutual interference between the sub-channels. The interference is inter-symbol interference (Inter-symbol interference, ISI), and is also referred to as intersymbol interference or inter-symbol crosstalk. A signal bandwidth on each sub-channel is less than a bandwidth of the channel. Therefore, it may be considered that flat fading occurs on each sub-channel, so that inter-symbol interference can be eliminated. In addition, because the bandwidth of each sub-channel is only a small part of the bandwidth of the original channel, channel equalization becomes relatively easy.

### 2. OFDM symbol and OFDM signal

An OFDM symbol is described from a perspective of time domain. One OFDM symbol may include synthesis information of a plurality of modulated subcarriers. A length unit of the OFDM symbol may be time.

To reduce inter-symbol interference, a guard interval is usually inserted into an OFDM symbol. For example, the guard interval may be a cyclic prefix (cyclic prefix, CP). The CP is formed by replicating a signal at a tail of valid data of an OFDM symbol to a header. An OFDM symbol to which a CP is added is referred to as a CP-OFDM symbol. The CP-OFDM symbol may include a normal (normal) CP-OFDM symbol, an extended (extended) CP-OFDM symbol, and the like.

Alternatively, for example, the guard interval may be valid data of an OFDM symbol. In other words, all valid data of the OFDM symbol is used as a prefix. In this case, one OFDM symbol includes two pieces of repeated OFDM valid data.

Alternatively, for example, the guard interval may be other content. For example, the guard interval is inserted by adding a zero to a header of an OFDM symbol. Specific content of the guard interval is not limited in embodiments of this application.

A signal including an OFDM symbol may be referred to as an OFDM signal. One OFDM signal may include one or more OFDM symbols.

### 3. Frame (Frame)

A frame is a unit of data transmission. The frame is described from a perspective of time domain. A length unit of the frame may be time. One frame of data may include one or more symbols (for example, OFDM symbols).

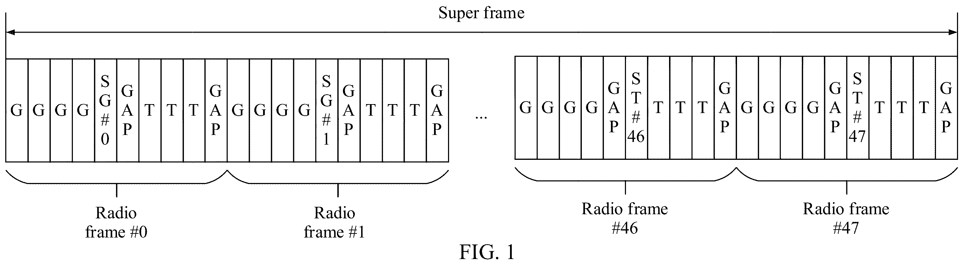

For ease of understanding, a radio frame and a super frame in a spark link basic (spark link basic, SLB) standard are used as an example for description. The super frame includes a plurality of radio frames, one radio frame includes a plurality of symbols, and the symbols may be, for example, OFDM symbols. For example, a period of the super frame is 1 millisecond (ms), that is, duration (or a length) of the super frame is 1 ms. In an example, as shown in FIG. 1, one super frame includes 48 radio frames, and duration of each radio frame is 1/48=20.833 microseconds (µs). The 48 radio frames are sequentially numbered as a radio frame #0 to a radio frame #47. Each radio frame includes several downlink symbols, several uplink symbols, an overhead symbol, and a switching gap (gap, GAP). The downlink symbol is used for downlink transmission, and the uplink symbol is used for uplink transmission. The overhead symbol may also be described as a flexible symbol, a specific symbol, or the like, and is used for synchronization, channel sounding, downlink control information (downlink control information, DCI) transmission, and the like. Overhead symbols may be classified into a downlink overhead symbol and an uplink overhead symbol. The switching gap is used for uplink and downlink switching. Duration of one switching gap in the radio frame is, for example, duration of one symbol in the radio frame.

For example, in a vehicle-mounted (or non-vehicle-mounted) wireless short-range communication system, an uplink usually refers to a direction in which a terminal (terminal, T) node sends data or information to a grant (grant, G) node, and may be represented by "T". A downlink usually refers to a direction in which the G node sends data or information to the T node, and may be represented by "G". In FIG. 1, the downlink symbol is represented as a G symbol, and the G symbol may also be described as a G-link symbol, a G-link data symbol, or the like. The uplink symbol is represented as a T symbol, and the T symbol is also described as a T-link symbol, a T-link data symbol, or the like. In the vehicle-mounted wireless short-range communication system, there is usually a communication requirement between different T nodes or between different G nodes, and communication between different T nodes or between different G nodes may occupy the foregoing overhead symbol. In FIG. 1, the downlink overhead symbol is represented as a special grant (special grant, SG) symbol, and the SG symbol may also be described as a G overhead symbol, an overhead G symbol, a G-link overhead symbol, or the like. The uplink overhead symbol is represented as a special terminal (special terminal, ST) symbol, and the ST symbol may also be described as a T overhead symbol, an overhead T symbol, a T-link overhead symbol, or the like. When transmission directions are not distinguished, the G overhead symbol and the T overhead symbol may be collectively referred to as system overhead symbols.

Each radio frame may include one or two overhead symbols, and one super frame may include a maximum of 96 overhead symbols. In an example, for the super frame shown in FIG. 1, each radio frame of the super frame includes one overhead symbol, the super frame includes 48 overhead symbols, and the 48 overhead symbols are consecutively numbered from 0 to 47. For example, an overhead symbol included in the radio frame #0 is an SG symbol #0, and an overhead symbol included in the radio frame #46 is an ST symbol #46.

It may be understood that the foregoing uses only the frame in the SLB standard as an example for description. During specific implementation, frame structures defined in different standards may be different. A specific frame structure is not limited in embodiments of this application.

### 4. Node (node)

A node is an electronic device having a communication capability, and is also referred to as a communication node. For example, the node may include an independent device like a handheld terminal, a vehicle, a vehicle-mounted device, a network side device, user equipment, an access terminal, a subscriber unit, a subscriber station, a mobile station, a remote station, a remote terminal, a wireless communication device, a user agent, or a user apparatus; or may be a component (for example, a chip or an integrated circuit) included in an independent device. The node may be any possible smart terminal device (for example, a mobile phone), a smart transportation device (for example, a vehicle or an uncrewed aerial vehicle), a smart manufacturing device, a smart home device (for example, a large screen or a speaker), or the like.

For example, when the node is a vehicle-mounted device, the node may be a vehicle cockpit domain (cockpit domain) device or a module in a vehicle cockpit domain device, for example, one or more of modules such as a cockpit domain controller (cockpit domain controller, CDC), a camera, a screen, a microphone, a stereo, an electronic key, and a passive entry passive start system controller. In a vehicle, the node may alternatively be a battery management system and a battery in a battery pack.

For example, when the node is a handheld terminal, the node may be a mobile phone (mobile phone), a wearable device, a tablet computer (pad), a computer (like a notebook computer or a palmtop computer) having a data receiving and sending function, or the like.

The node in embodiments of this application may be used in a plurality of application scenarios, for example, the following application scenarios: a mobile internet (mobile internet, MI), industrial control (industrial control), self driving (self driving), transportation safety (transportation safety), the internet of things (internet of things, IoT), a smart city (smart city), or a smart home (smart home).

The node in this application may be applied to a plurality of wireless communication scenarios, for example, applied to one or more of the following scenarios: SparkLink (SparkLink), a long term evolution (long term evolution, LTE) network, a 5^{th}-generation mobile communication technology (5^{th}-generation mobile communication technology, 5G), a wireless local area network (for example, Wi-Fi), Bluetooth (Bluetooth, BT), ZigBee (ZigBee), or a vehicle-mounted short-range wireless communication network.

In some application scenarios or some network types, a name of a device having a similar communication capability may not be referred to as a node. However, for ease of description, devices having communication capabilities are collectively referred to as nodes in embodiments of this application.

### 5. Measurement node

A measurement node is a node that is in nodes participating in ranging, angle measurement, or positioning and whose location is used as a reference location for ranging, angle measurement, or positioning. For ease of description, the ranging, angle measurement, or positioning may be collectively referred to as measurement subsequently.

For example, the measurement node may also be referred to as a measurement anchor or a measurement base station. For example, in a ranging application scenario, the measurement node may be referred to as a ranging anchor or a ranging base station. For example, in a positioning application scenario, the measurement node may be referred to as a positioning anchor, a positioning base station, or a beacon (beacon).

### 6. To-be-measured node

A to-be-measured node is a to-be-measured node in nodes participating in ranging, angle measurement, or positioning. A distance, an angle, or a location of the to-be-measured node relative to a reference location is determined by using a ranging process, an angle measurement process, or a positioning process.

For example, the to-be-measured node may also be referred to as a measurement tag. For example, in a ranging application scenario, the to-be-measured node may be referred to as a ranging tag. For example, in a positioning application scenario, the to-be-measured node may be referred to as a positioning tag.

### 7. Primary node

A primary node is a node that configures a resource and a parameter for transmitting a signal (including a measurement signal), signaling (including signaling related to ranging, angle measurement, or positioning), or service information (including service information related to ranging, angle measurement, or positioning) between nodes. The primary node may be an independent entity, or may be a measurement node or a to-be-measured node.

For example, the primary node may be a G node in a SparkLink standard (for example, the SLB standard or a SparkLink low energy (SparkLink low energy, SLE) standard). Alternatively, for example, the primary node may be a master (master) device in a Bluetooth standard (for example, a Bluetooth low energy (Bluetooth low energy, BLE) standard), and is also referred to as an M node. Alternatively, for example, the primary node may be an access point (access point, AP) in a Wi-Fi standard. Alternatively, for example, the primary node may be a base station (base station) in wide area wireless communication. It may be understood that the description herein is merely an example, and does not constitute a limitation on embodiments of this application.

### 8. Secondary node

A secondary node is a node that receives a configuration of a primary node, and communicates (including sending and/or receiving) a signal (including a measurement signal), signaling (including signaling related to ranging, angle measurement, or positioning), or service information (including service information related to ranging, angle measurement, or positioning) with another node based on the configuration of the primary node.

For example, the secondary node may be a T node in the SparkLink standard. Alternatively, for example, the secondary node may be a slave (slave) device in a Bluetooth standard, and is also referred to as an S node. Alternatively, for example, the secondary node may be a station (station, STA) in a Wi-Fi standard. Alternatively, for example, the secondary node may be user equipment (user equipment, UE) in wide area wireless communication. It may be understood that the description herein is merely an example, and does not constitute a limitation on embodiments of this application.

### 9. Communication domain

A communication domain is a system including a group of communication nodes that have a communication relationship and a communication connection relationship (that is, a communication link) between the communication nodes. One communication domain may include one primary node and at least one secondary node. In a wireless communication scenario in which a node is located, a plurality of communication domains may be included in a specific communication area or range.

The following describes embodiments of this application by using examples with reference to the accompanying drawings.

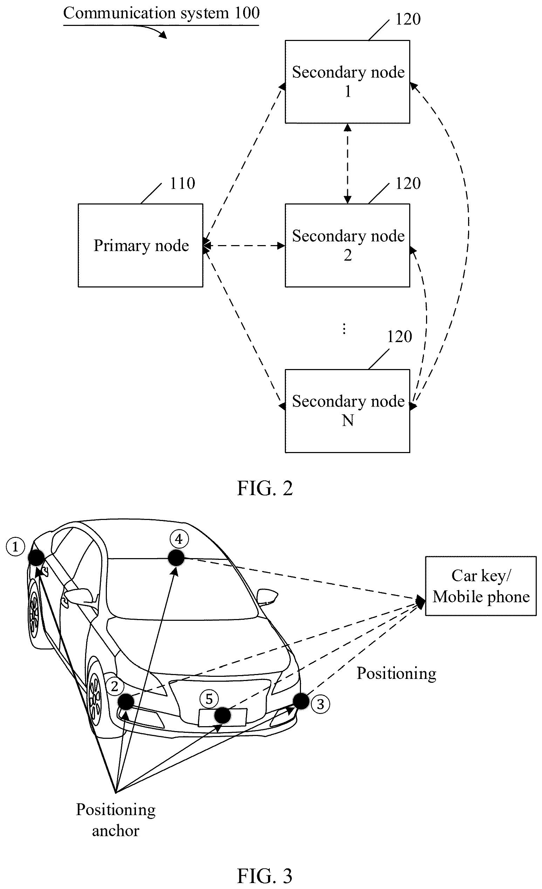

FIG. 2 shows an example of a communication system 100. The communication system 100 includes one primary node 110 and N secondary nodes 120 (N is an integer greater than or equal to 1). Wireless communication may be performed between the primary node 110 and the N secondary nodes 120. Wireless communication may also be performed between the N secondary nodes 120, and specifically, communication may be implemented based on scheduling of the primary node 110. For description of the wireless communication scenario and specific implementations of the primary node and the secondary node, refer to the foregoing description of the terms. Details are not described herein again.

For example, the primary node 110 in the communication system 100 may be preconfigured. Alternatively, the primary node 110 may be determined by a plurality of nodes in the communication system 100 through election. In the communication system 100, after the primary node 110 is determined, another node is a secondary node 120. The description herein is merely an example, and does not constitute a limitation on embodiments of this application. A manner of determining the primary node 110 is not limited in embodiments of this application.

For example, the communication system 100 may be a system applied to a measurement scenario, for example, applied to a scenario like a vehicle-mounted wireless positioning scenario, an indoor positioning scenario, a navigation scenario, a ranging scenario, or an angle measurement scenario. The measurement scenario may include measurement in a machine perception scenario, and the like. Alternatively, the communication system 100 may be a system applied to another wide area wireless communication scenario or another local area wireless communication scenario.

In a possible implementation, in a measurement application scenario, the primary node 110 may be a measurement node, that is, the primary node is the measurement node. The secondary node 120 (for example, a secondary node 1 in FIG. 2 is used as an example) may be a to-be-measured node, that is, the secondary node is the to-be-measured node. A location at which the measurement node is located is used as a reference location for the measurement. The to-be-measured node is a node whose distance and angle need to be measured or a node that needs to be positioned. After the primary node 110 configures a transmission resource for the primary node 110 and the secondary node 1, a measurement signal may be sent between the primary node 110 and the secondary node 1 to implement measurement on the to-be-measured node, namely, the secondary node 1.

For example, in the process in which the measurement signal is sent between the primary node 110 and the secondary node 1 to implement the measurement on the secondary node 1, the primary node 110 may send the measurement signal to the secondary node 1 for one or more times. Alternatively, the secondary node 1 may send the measurement signal to the primary node 110 for one or more times. Alternatively, the primary node 110 may send a measurement signal to the secondary node 1 for one or more times, and the secondary node 1 may also send a measurement signal to the primary node 110 for one or more times. In other words, measurement signals may be communicated between the measurement node and the to-be-measured node for one or more times, to implement the measurement on the to-be-measured node. A specific measurement implementation process is not limited in embodiment of this application.

**In** another possible implementation, in the foregoing measurement application scenario, the primary node 110 may be a to-be-measured node, that is, the primary node is the to-be-measured node. The secondary node 1 may be a measurement node. Similarly, after the primary node 110 configures a transmission resource for the primary node 110 and the secondary node 1, a measurement signal may be sent between the primary node 110 and the secondary node 1, to implement the foregoing measurement on the to-be-measured node, that is, the primary node 110. For description of the measurement, for example, refer to the foregoing description. Details are not described herein.

**In** another possible implementation, in the foregoing measurement application scenario, the primary node 110 is neither a measurement node nor a to-be-measured node, and is mainly configured to configure a transmission resource for the measurement node and the to-be-measured node. In other words, the primary node 110 is a node independent of the measurement node and the to-be-measured node. For example, the secondary node 1 may be a measurement node, and a secondary node 2 in FIG. 2 may be a to-be-measured node. After the primary node 110 configures a transmission resource for the secondary node 1 and the secondary node 2, a measurement signal may be sent between the secondary node 1 and the secondary node 2 to implement measurement on the to-be-measured node, namely, the secondary node 2. For description of the measurement, for example, refer to the foregoing description. Details are not described herein.

It may be understood that the foregoing measurement may be performed on the to-be-measured node by using one or more measurement nodes. Specifically, one or more measurement nodes may exchange measurement signals with the to-be-measured node to implement ranging, angle measurement, or positioning of the to-be-measured node. The plurality of measurement nodes are configured to implement the measurement on the to-be-measured node, so that measurement accuracy can be improved. For ease of understanding, for example, refer to FIG. 3.

FIG. 3 shows an example of positioning in a vehicle-mounted positioning scenario. In the vehicle-mounted positioning scenario, positioning anchors are deployed at four vehicle corners (locations shown by ①, ②, ③, and ④ in FIG. 3) outside a vehicle. One positioning anchor is deployed near a center console, a rear view mirror, or a ceiling (inside a roof of the vehicle) in the vehicle (the center console is used as an example in FIG. 3, and a location is represented by ⑤). A vehicle-mounted wireless communication device like a display, a microphone, a speaker, a camera, or a telematics-box (telematics-BOX, T-BOX) in the vehicle may also be reused as a positioning anchor (not shown in FIG. 3), to position a positioning tag like a car key or a mobile phone. It can be learned that a plurality of positioning anchors may be used to position one positioning tag, to improve positioning accuracy.

In addition, for example, in FIG. 3, the car key or the mobile phone may be a primary node, and all positioning anchors in the vehicle are secondary nodes. Alternatively, any positioning anchor in the vehicle may be a primary node, and all other positioning anchors in the vehicle, and the car key (or the mobile phone) are secondary nodes.

The communication system 100 may be a communication domain. It may be understood that the communication system 100 shown in FIG. 2 and the vehicle-mounted positioning scenario shown in FIG. 3 are merely examples, and are not intended to limit embodiments of this application.

Communication between nodes in the communication system 100 may be implemented by transmitting an OFDM signal, that is, the measurement signal may be an OFDM signal. However, in an existing OFDM signal communication solution, many errors are introduced in a processing process of receiving and/or sending an OFDM signal. In particular, a synchronization phase error is introduced. The synchronization phase error causes a deviation in a received signal, affecting precision of subsequent processing. For example, due to the synchronization phase error, an error of a ranging result, an angle measurement result, or a positioning result is large, and precision required for ranging, angle measurement, or positioning cannot be achieved. To improve the precision, an embodiment of this application provides a communication processing method.

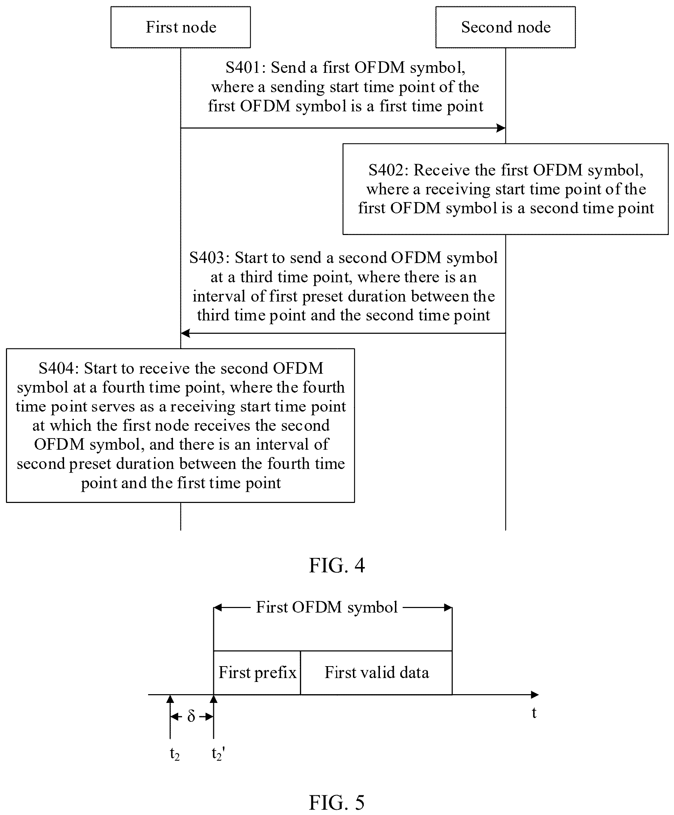

For example, refer to FIG. 4. The communication processing method provided in this embodiment of this application may include but is not limited to the following steps.

S401: A first node sends a first OFDM symbol to a second node, where a sending start time point of the first OFDM symbol is a first time point.

For example, the first node and the second node may be communication nodes in a communication system (for example, the communication system 100 shown in FIG. 2). The first node may be a primary node in the communication system, and the second node is a secondary node in the communication system. Alternatively, the first node may be a secondary node in the communication system, and the second node is a primary node in the communication system. Alternatively, both the first node and the second node are secondary nodes in the communication system. A primary node in the communication system configures a time-frequency resource for the first node and the second node to implement communication between the first node and the second node. The communication between the first node and the second node may be interactive communication that is of a measurement signal and that is initiated for measurement (for example, ranging, angle measurement, or positioning) on the first node or the second node.

During specific implementation, after the primary node in the communication system configures the time-frequency resource for the first node, the first node may send a measurement signal (referred to as a first measurement signal for short) to the second node through the time-frequency resource. The first measurement signal is an OFDM signal. The first measurement signal includes one or more OFDM symbols. For example, the first measurement signal may be a frame signal, for example, may be a radio frame or a super frame. It may be understood that the description herein is merely an example, and a length of the first measurement signal is not limited in embodiments of this application.

For example, the first OFDM symbol may be a 1^{st} OFDM symbol in the first measurement signal, that is, an OFDM symbol that is first sent in the first measurement signal.

For example, the first OFDM symbol includes a prefix part (referred to as a first prefix for short) and a valid data part (referred to as first valid data for short). In a possible implementation, the first prefix is a cyclic prefix of the first OFDM symbol. For description of the cyclic prefix, refer to the foregoing term description of the OFDM symbol. Details are not described herein again. In another possible implementation, the first prefix may be the first valid data, that is, all valid data of the first OFDM symbol is used as a prefix. In this case, one OFDM symbol includes two pieces of repeated OFDM valid data. Alternatively, the first prefix may be other content. For example, a zero is added to a header of the first OFDM symbol to serve as the first prefix. A specific implementation of the first prefix is not limited in embodiments of this application.

During specific implementation, in a process of sending the first measurement signal, the first node may determine a start time point for sending the first OFDM symbol, that is, determine the first time point.

In a possible implementation, the first time point may be a moment at which the first node sends start point data of the first prefix. In other words, the first node uses the moment at which the start point data of the first prefix is sent as the start time point for sending the first OFDM symbol.

Alternatively, in another possible implementation, the first time point may be a moment at which the first node sends start point data of the first valid data. In other words, the first node uses the moment at which the start point data of the first valid data is sent as the start time point for sending the first OFDM symbol.

For example, the first time point may be a moment at which the start point data of the first prefix or the start point data of the first valid data is sent from a baseband processing module in the first node. Alternatively, for example, the first time point may be a moment at which the start point data of the first prefix or the start point data of the first valid data is sent from a radio frequency antenna port in the first node. It may be understood that the description herein is merely an example, and does not constitute a limitation on embodiments of this application.

S402: The second node receives the first OFDM symbol, where a receiving start time point of the first OFDM symbol is a second time point.

During specific implementation, after the primary node in the communication system configures the time-frequency resource for the second node, the second node may receive the first measurement signal through the time-frequency resource. The first OFDM symbol is the OFDM symbol that is first sent in the first measurement signal. In this case, compared with another OFDM symbol in the first measurement signal, the first OFDM symbol is also first received by the second node. The second node receives the first OFDM symbol after synchronizing with the first node, so that the second node determines a start time point for receiving the first OFDM symbol, or determines the receiving start time point of the first OFDM symbol. For example, time synchronization between the first node and the second node may be implemented by transmitting a synchronization signal or by using another synchronization method. This is not limited in embodiments of this application.

Based on the time synchronization between the second node and the first node, it may be determined that the start time point at which the second node receives the first OFDM symbol is the second time point.

In a possible implementation, the second time point serves as a moment at which the second node receives the start point data of the first prefix. In other words, the second node uses the moment at which the start point data of the first prefix is received as the start time point for receiving the first OFDM symbol.

Alternatively, in another possible implementation, the second time point serves as a moment at which the second node receives the start point data of the first valid data. In other words, the second node uses the moment at which the start point data of the first valid data is received as the start time point for receiving the first OFDM symbol.

For example, the second time point may be used as a moment at which the start point data of the first prefix or the start point data of the first valid data arrives at a baseband processing module in the second node. Alternatively, for example, the second time point may be used as a moment at which the start point data of the first prefix or the start point data of the first valid data arrives at a radio frequency antenna port in the second node. It may be understood that the description herein is merely an example, and does not constitute a limitation on embodiments of this application.

For example, the second time point is determined based on the time synchronization between the second node and the first node. Due to a synchronization error, the second time point is not necessarily a moment at which the second node actually receives the start point data of the first prefix or the start point data of the first valid data. In a possible implementation, the second time point is the moment at which the second node actually receives the start point data of the first prefix or the start point data of the first valid data. Alternatively, in another possible implementation, the second time point is earlier than the moment at which the second node actually receives the start point data of the first prefix or the start point data of the first valid data. For ease of understanding, for example, refer to FIG. 5. For example, the second time point serves as the moment at which the second node receives the start point data of the first prefix. In FIG. 5, t₂ is the second time point, and t₂' is the moment at which the second node actually receives the start point data of the first prefix. It can be learned that t₂ is earlier than t₂'. There is a deviation δ between t₂ and t₂'. The deviation δ is caused by the synchronization error. When the deviation δ caused by the synchronization error is 0, t₂ is equal to t₂'. In other words, the second time point is indeed the moment at which the second node actually receives the start point data of the first prefix. Similarly, the second time point serves as the moment at which the second node receives the start point data of the first valid data. Details are not described again.

It may be understood that, in addition to the synchronization error, the foregoing deviation δ may be caused by another reason, for example, caused by a factor like device performance or a hardware limitation of the sending node and/or the receiving node (for example, an inherent delay of a transceiver channel or a device or system processing delay). In the description of this embodiment of this application, an example in which the deviation δ is caused by the synchronization error is mainly used. However, a reason of the deviation δ is not limited in embodiments of this application.

In a possible implementation, after determining the second time point, the second node uses an OFDM symbol started to be received at the second time point as the first OFDM symbol, then demodulates the first OFDM symbol, and performs channel estimation on the first OFDM symbol, to obtain channel state information (channel state information, CSI) of each subcarrier in the OFDM symbol.

For example, if the second time point serves as the moment at which the second node receives the start point data of the first prefix, the second node may first remove the first prefix from the first OFDM symbol, and then perform channel estimation on OFDM data from which the first prefix is removed. To be specific, the OFDM data from which the first prefix is removed is used as the first valid data, and channel estimation is performed on the first valid data to obtain the CSI of each subcarrier in the first OFDM symbol.

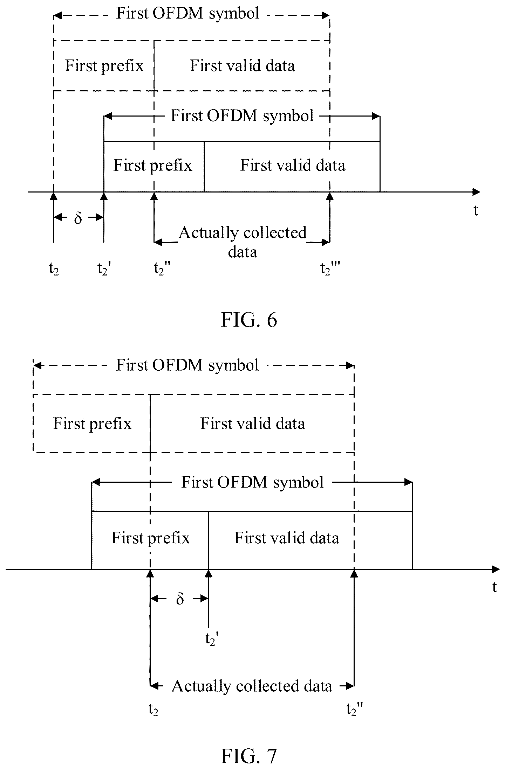

For example, the first prefix may be removed from the first OFDM symbol by using the following method: The second node may start, after specific duration starting from the second time point elapses, to collect data (for example, collect data in a sampling manner). The specific duration is duration of a length of the first prefix. The duration of the length of the first prefix is duration occupied by the first prefix, or duration of the first prefix. The collected data is used as the first valid data. Alternatively, for example, the second node may start to collect data at the second time point. After data collection is completed (for example, data collection duration reaches duration of the length of the first measurement signal), the second node discards data that is of the length of the first prefix and that is first collected. Then, a part that is in the collected data and that is not discarded is used as the first valid data. It may be understood that the description herein is merely an example, and does not constitute a limitation on embodiments of this application. For ease of understanding, for example, refer to FIG. 6. As shown in FIG. 6, a second time point t₂ serves as the moment at which the second node receives the start point data of the first prefix (refer to the first prefix represented by a dashed line). To be specific, a virtual first OFDM symbol represented by a dashed line is used as an OFDM symbol started to be received by the second node at the second time point t₂. A real first OFDM symbol (represented by a solid line) starts to be received by the second node at t₂'. However, the second node still removes the first prefix from the first OFDM symbol by using the second time point t₂ as a start point. It can be learned from FIG. 6 that, after the first prefix is removed, the data that is of the first OFDM symbol and that is actually collected by the second node is data received by the second node between a time point t₂" and a time point t₂‴. It can be learned that t₂‴-t₂" is duration of a length of the first valid data. In addition, if the first prefix is the cyclic prefix, the first valid data, or the like, the actually collected data may exactly form the first valid data.

For example, if the second time point serves as the moment at which the second node receives the start point data of the first valid data, the second node may start to collect data at the second time point, use the collected data (for example, data collected within a time period of duration, starting from the second time point, of a length of the first valid data) as the first valid data, and perform channel estimation on the first valid data to obtain the CSI of each subcarrier in the first OFDM symbol. For ease of understanding, for example, refer to FIG. 7. As shown in FIG. 7, a second time point t₂ serves as the moment at which the second node receives the start point data of the first valid data (refer to the first valid data represented by a dashed line). To be specific, virtual first valid data represented by a dashed line is used as first valid data started to be received by the second node at the second time point t₂. Real first valid data (represented by a solid line) starts to be received by the second node at t₂'. However, the second node still starts to collect the first valid data by using the second time point t₂ as a start point. It can be learned from FIG. 7 that the data that is of the first OFDM symbol and that is actually collected by the second node is data received by the second node between the second time point t₂ and a time point t₂". It can be learned that t₂"-t₂ is duration of a length of the first valid data. In addition, if the first prefix is the cyclic prefix, the first valid data, or the like, the actually collected data may exactly form the first valid data.

In a possible implementation, if the first measurement signal includes the plurality of OFDM symbols, the plurality of OFDM symbols are sent consecutively. The first OFDM symbol is a symbol that is first received by the second node in the plurality of OFDM symbols. A length of a prefix and a length of valid data of each OFDM symbol are fixed, or in other words, a length of a prefix and a length of valid data of each OFDM symbol are fixed, and both are specified in a protocol. Therefore, after it is determined that the start time point at which the second node receives the first OFDM symbol is the second time point, a receiving start time point of another symbol in the plurality of OFDM symbols can be calculated. For example, the plurality of OFDM symbols are two OFDM symbols (referred to as a symbol 1 and a symbol 2 for short). It is assumed that it has been determined that a start time point at which the second node receives the symbol 1 is a time point 1. In addition, it is assumed that the length (or occupied duration) of the prefix and the length (or occupied duration) of the valid data in each OFDM symbol are respectively t_{A} and t_{B}. In this case, it may be calculated that a start time point at which the second node receives the symbol 2 is a time point obtained by adding t_{A} and t_{B} to the time point 1. After the receiving start time point of the another symbol is determined, the another symbol may be processed with reference to the foregoing processing process of the first OFDM symbol. Details are not described herein again.

S403: The second node starts to send a second OFDM symbol to the first node at a third time point, where there is an interval of first preset duration between the third time point and the second time point.

During specific implementation, after determining the second time point, the second node starts to send a second measurement signal to the first node after the first preset duration using the second time point as a start point elapses. The second measurement signal is an OFDM signal. The second measurement signal includes one or more OFDM symbols. For example, the second measurement signal may be a frame signal, for example, may be a radio frame or a super frame. It may be understood that the description herein is merely an example, and a length of the second measurement signal is not limited in embodiments of this application.

For example, the second OFDM symbol may be a 1^{st} OFDM symbol in the second measurement signal, that is, an OFDM symbol that is first sent in the second measurement signal.

For example, the second OFDM symbol includes a prefix part (referred to as a second prefix for short) and a valid data part (referred to as second valid data for short). In a possible implementation, the second prefix is a cyclic prefix of the second OFDM symbol. For description of the cyclic prefix, refer to the foregoing term description of the OFDM symbol. Details are not described herein again. In another possible implementation, the second prefix may be the second valid data, that is, all valid data of the second OFDM symbol is used as a prefix. In this case, one OFDM symbol includes two pieces of repeated OFDM valid data. Alternatively, the second prefix may be other content. For example, a zero is added to a header of the second OFDM symbol to serve as the second prefix. A specific implementation of the second prefix is not limited in embodiments of this application.

During specific implementation, the third time point is a moment at which the second node sends start point data of the second prefix.

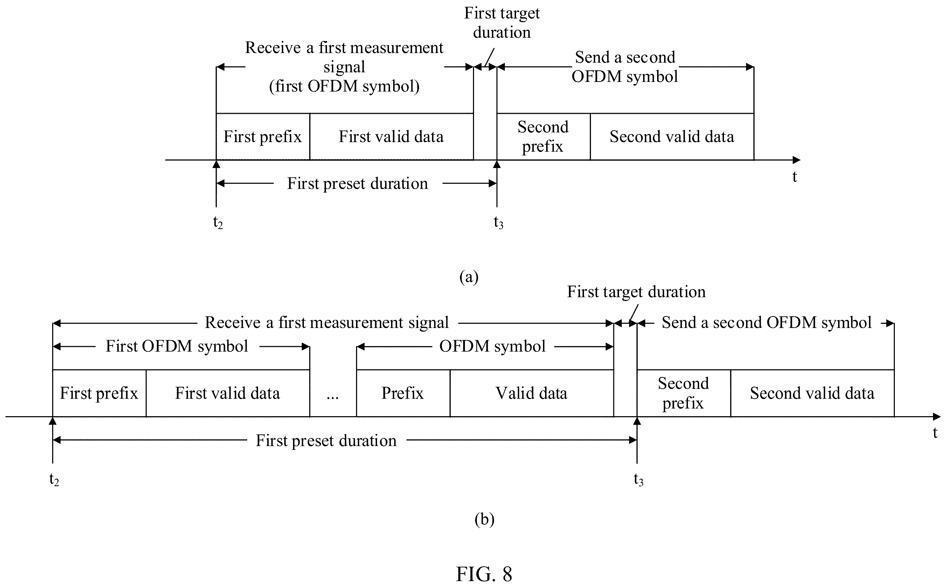

For example, if the second time point determined by the second node serves as the moment at which the second node receives the start point data of the first prefix, the first preset duration is a sum of the duration of the length of the first measurement signal and first target duration. For example, in a possible implementation, the first target duration includes, for example, duration of a switching gap GAP, or includes a system overhead symbol and duration of a GAP. For the system overhead symbol and the GAP, refer to the related descriptions in FIG. 1. Details are not described herein again. Alternatively, in another possible implementation, in addition to the duration of the GAP (or the system overhead symbol and the duration of the GAP), the first target duration may further include first duration. The first duration may be, for example, duration of one or more radio frames, or may be, for example, any specified duration. The first duration is not limited in embodiments of this application. For example, within the first duration, the first node and/or the second node may communicate with or not communicate with another node in the communication system. For ease of understanding the first preset duration, for example, refer to FIG. 8.

In FIG. 8, a second time point t₂ serves as the moment at which the second node receives the start point data of the first prefix, and a third time point t₃ is the moment at which the second node sends the start point data of the second prefix. As shown in (a) in FIG. 8, it is assumed that the first measurement signal includes only the first OFDM symbol, the first preset duration is a sum of the duration of the length of the first OFDM symbol and the first target duration. Alternatively, as shown in (b) in FIG. 8, it is assumed that the first measurement signal includes a plurality of OFDM symbols, the first preset duration is a sum of duration of a total length of the plurality of OFDM symbols and the first target duration. A length of the first target duration on a time axis shown in FIG. 8 is merely an example, and does not constitute a limitation on embodiments of this application. The same applies to the first target duration shown in the following figures. Details are not described again.

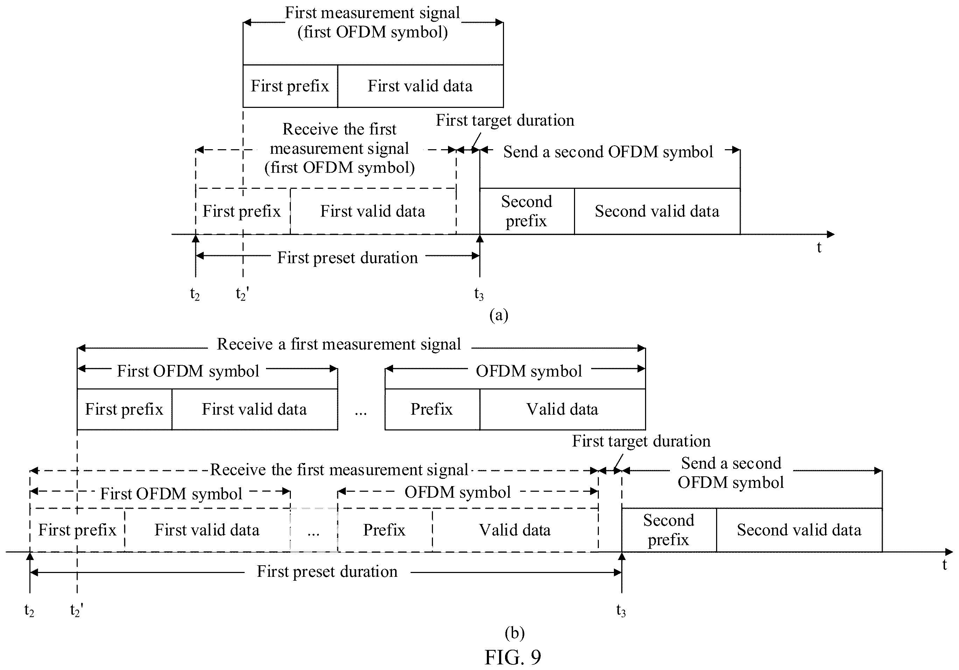

In FIG. 8, an example in which the start point data of the first prefix can be exactly received at the determined second time point is mainly used. In another possible implementation, due to a deviation of the receiving start time point caused by a synchronization error, the determined second time point may be earlier than a moment at which the second node actually receives the start point data of the first prefix. For example, refer to FIG. 9. In FIG. 9, a dashed line represents a virtual first OFDM symbol, and a solid line represents a real OFDM symbol. t₂ is the second time point, t₂' is the moment at which the second node actually receives the start point data of the first prefix, and t₃ is the third time point. As shown in (a) in FIG. 9, it is assumed that the first measurement signal includes only the first OFDM symbol, the first preset duration is a sum of the duration of the length of the first OFDM symbol and the first target duration. Alternatively, as shown in (b) in FIG. 9, it is assumed that the first measurement signal includes a plurality of OFDM symbols, the first preset duration is a sum of duration of a total length of the plurality of OFDM symbols and the first target duration. In addition, it can be learned from FIG. 9 that, although the deviation of the receiving start time point is caused by the synchronization error, the second time point t₂ is still used as a start point of the first preset duration.

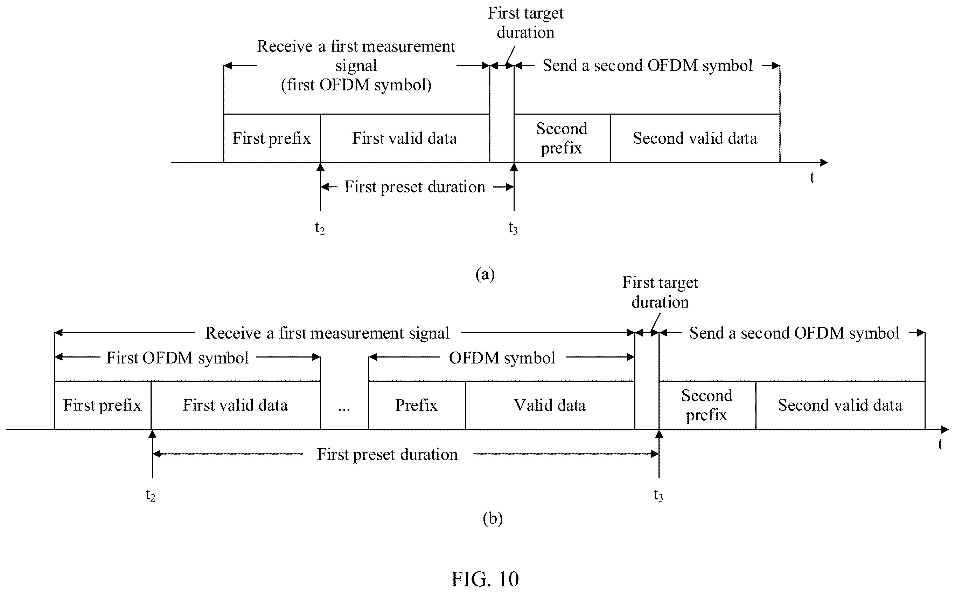

Alternatively, for example, if the second time point determined by the second node serves as the moment at which the second node receives the start point data of the first valid data, the first preset duration is a sum of duration of a length of a remaining signal obtained by removing the prefix of the first OFDM symbol from the first measurement signal and the first target duration. For example, refer to FIG. 10. Similarly, t₂ is the second time point, and t₃ is the third time point. As shown in (a) in FIG. 10, it is assumed that the first measurement signal includes only the first OFDM symbol, the first preset duration is a sum of duration of a length of the first valid data in the first OFDM symbol and the first target duration. Alternatively, as shown in (b) in FIG. 10, it is assumed that the first measurement signal includes a plurality of OFDM symbols, the first preset duration is a sum of duration of a total length of a remaining signal obtained by removing the prefix of the first OFDM symbol from the plurality of OFDM symbols and the first target duration.

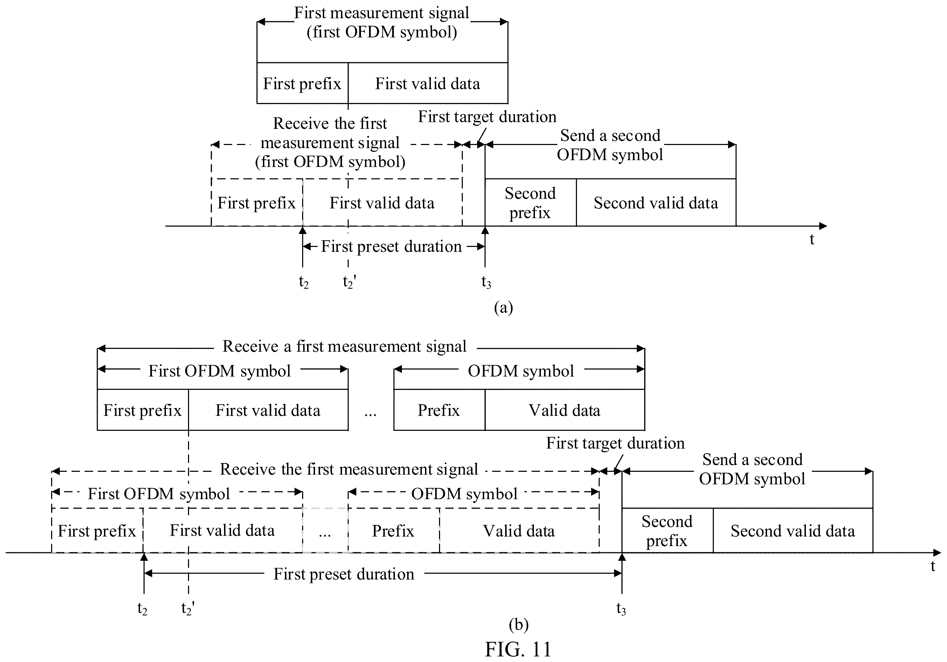

In FIG. 10, an example in which the start point data of the first valid data can be exactly received at the determined second time point is mainly used. In another possible implementation, due to a deviation of the receiving start time point caused by a synchronization error, the determined second time point may be earlier than a moment at which the second node actually receives the start point data of the first valid data. For example, refer to FIG. 11. In FIG. 11, a dashed line represents a virtual first OFDM symbol, and a solid line represents a real OFDM symbol. t₂ is the second time point, t₂' is the moment at which the second node actually receives the start point data of the first valid data, and t₃ is the third time point. As shown in (a) in FIG. 11, it is assumed that the first measurement signal includes only the first OFDM symbol, the first preset duration is a sum of duration of a length of the first valid data in the first OFDM symbol and the first target duration. Alternatively, as shown in (b) in FIG. 11, it is assumed that the first measurement signal includes a plurality of OFDM symbols, the first preset duration is a sum of duration of a total length of a remaining signal obtained by removing the prefix of the first OFDM symbol from the plurality of OFDM symbols and the first target duration. In addition, it can be learned from FIG. 11 that, although the deviation of the receiving start time point is caused by the synchronization error, the second time point t₂ is still used as a start point of the first preset duration.

Based on the example descriptions in FIG. 8 to FIG. 11, it can be learned that the second node starts to send the second OFDM symbol (or starts to send the second measurement signal) after the first preset duration starting from the receiving start time point t₂ of the first measurement signal elapses.

It may be understood that the foregoing description of the first preset duration is merely an example. During specific implementation, the first preset duration may alternatively be other user-defined preset duration. This is not limited in embodiments of this application. For example, the first preset duration may be duration specified in a protocol.

S404: The first node starts to receive the second OFDM symbol at a fourth time point, where the fourth time point serves as a receiving start time point at which the first node receives the second OFDM symbol, and there is an interval of second preset duration between the fourth time point and the first time point.

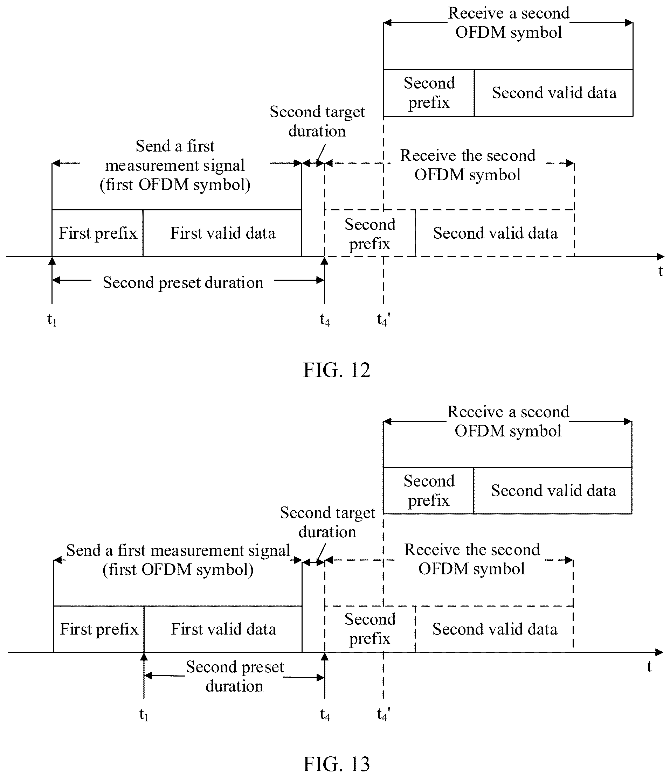

During specific implementation, after determining the first time point, the first node starts to receive the second OFDM symbol from the second node after the second preset duration using the first time point as a start point elapses. For example, the second preset duration may be the same as or different from the first preset duration. Alternatively, in another possible implementation, the second preset duration may be defined as being different from the first preset duration. In the following description, an example in which the second preset duration is defined as being the same as the first preset duration is mainly used for description. For ease of understanding the second preset duration, for example, refer to FIG. 12 or FIG. 13.

In FIG. 12, an example in which the first time point is the moment at which the first node sends the start point data of the first prefix is used. In FIG. 13, an example in which the first time point is the moment at which the first node sends the start point data of the first valid data is used. In FIG. 12 and FIG. 13, t₁ is the first time point, t₄ is the fourth time point, and t₄' is a moment at which the first node actually receives the start point data of the second prefix in the second OFDM symbol. The second preset duration in FIG. 12 is a sum of the duration of the length of the first measurement signal and second target duration. The second preset duration in FIG. 13 is a sum of the duration of the remaining signal length obtained by removing the first prefix from the first measurement signal and the second target duration. For the second target duration, for example, refer to the related description of the first target duration. The second target duration may be the same as or different from the first target duration.

It can be learned from FIG. 12 and FIG. 13 that the first node starts to send the first measurement signal at the first time point t₁, and then starts to receive the second OFDM symbol from the second node after the second preset duration elapses. In other words, the second OFDM symbol starts to be received at the fourth time point t₄. Even if the second OFDM symbol has not been transmitted to the first node at the fourth time point t₄ due to a transmission delay and the synchronization error, but is transmitted to the first node at the time point t₄', the fourth time point t₄ is still used as the receiving start time point at which the first node receives the second OFDM symbol. A 1^{st} sample collected at the fourth time point t₄ is used as a 1^{st} sample of the second OFDM symbol. In FIG. 12 and FIG. 13, an example in which the first measurement signal is the first OFDM symbol is mainly used for description. A case in which the first measurement signal includes a plurality of OFDM symbols is similar. Details are not described again.

For example, based on the foregoing description, FIG. 12, and FIG. 13, it can be learned that regardless of whether the first preset duration is equal to the second preset duration, the receiving start time point (namely, the fourth time point) that is of the second OFDM symbol and that is determined by the first node is earlier than or equal to a moment (namely, the time point t₄') at which the start point data of the second prefix of the second OFDM symbol is transmitted to the first node. In addition, that the second node receives the first OFDM symbol is similar. Regardless of whether the first preset duration is equal to the second preset duration, the receiving start time point (namely, the second time point) that is of the first OFDM symbol and that is determined by the second node is earlier than or equal to a moment (namely, the time point t₂') at which the start point data of the first prefix of the first OFDM symbol is transmitted to the second node. Herein, an example in which the receiving start time point is a moment at which the start point data of the prefix is received is used. Similarly, the receiving start time point is a moment at which the start point data of the valid data is received. Details are not described again.

In a possible implementation, after receiving the second OFDM symbol, the first node demodulates the second OFDM symbol, and performs channel estimation on the second OFDM symbol to obtain CSI of each subcarrier in the OFDM symbol.

For example, the fourth time point serves as a moment at which the first node receives the start point data of the second prefix. In this case, the first node may first remove the second prefix from the second OFDM symbol, and then perform channel estimation on OFDM data from which the second prefix is removed. To be specific, the OFDM data from which the second prefix is removed is used as the second valid data, and channel estimation is performed on the second valid data to obtain the CSI of each subcarrier in the second OFDM symbol.

For example, the second prefix may be removed from the second OFDM symbol by using the following method: The first node may start, after specific duration starting from the fourth time point elapses, to collect data (for example, collect data in a sampling manner). The specific duration is duration of a length of the second prefix. The duration of the length of the second prefix is duration occupied by the second prefix, or duration of the second prefix. The collected data is used as the second valid data. Alternatively, for example, the first node may start to collect data at the fourth time point. After data collection is completed (for example, data collection duration reaches duration of the length of the second measurement signal), the first node discards data that is of the length of the second prefix and that is first collected. Then, a part that is in the collected data and that is not discarded is used as the second valid data. It may be understood that the description herein is merely an example, and does not constitute a limitation on embodiments of this application. For ease of understanding, for example, refer to the related description of FIG. 6. In FIG. 6, for understanding, the first OFDM symbol may be considered as the second OFDM symbol, the time point t₂ may be considered as the fourth time point, and the time point t₂' may be considered as a moment at which the second OFDM symbol is actually transmitted to the first node.

In a possible implementation, if the second measurement signal includes the plurality of OFDM symbols, the plurality of OFDM symbols are sent consecutively. The second OFDM symbol is a symbol that is first received by the first node in the plurality of OFDM symbols. A length of a prefix and a length of valid data of each OFDM symbol are fixed, or in other words, a length of a prefix and a length of valid data of each OFDM symbol are fixed, and both are specified in a protocol. Therefore, after it is determined that the start time point at which the first node receives the second OFDM symbol is the fourth time point, a receiving start time point of another symbol in the plurality of OFDM symbols can be calculated. After the receiving start time point of the another symbol is determined, the another symbol may be processed with reference to the foregoing processing process of the second OFDM symbol. Details are not described herein again.

Based on the foregoing description, in step S402, the second node may obtain a channel estimation result (referred to as a first channel estimation result for short) based on the received first measurement signal. The first channel estimation result includes a CSI value obtained by the second node by performing channel estimation on each OFDM symbol included in the first measurement signal. In addition, in step S404, the first node may obtain a channel estimation result (referred to as a second channel estimation result for short) based on the received second measurement signal. The second channel estimation result includes a CSI value obtained by the first node by performing channel estimation on each OFDM symbol included in the second measurement signal.

In a possible implementation, after obtaining the first channel estimation result, the second node may send the first channel estimation result to the first node, so that the first node implements ranging, angle measurement, or positioning based on the first channel estimation result and the second channel estimation result. For example, ranging is used as an example. The first node may perform composite multiplication on the first channel estimation result and the second channel estimation result to obtain a composite channel measurement, and then input the composite channel measurement into a ranging resolving algorithm (for example, a super-resolution algorithm), to obtain a ranging result between the first node and the second node.

Alternatively, in another possible implementation, after obtaining the second channel estimation result, the first node may send the second channel estimation result to the second node, so that the second node implements ranging, angle measurement, or positioning based on the first channel estimation result and the second channel estimation result.

Alternatively, in another possible implementation, after obtaining the first channel estimation result, the second node sends the first channel estimation result to a third node, and after obtaining the second channel estimation result, the first node also sends the second channel estimation result to the third node, so that the third node implements ranging, angle measurement, or positioning based on the first channel estimation result and the second channel estimation result. For example, the third node may be, for example, a node other than the first node and the second node in the communication system.

In a possible implementation, in a process of sending the second measurement signal, the second node may determine a start time point (a fifth time point for short) for sending the second OFDM symbol.

In a possible implementation, the fifth time point may be the moment at which the second node sends the start point data of the second prefix. In other words, the second node uses the moment at which the start point data of the second prefix is sent as the start time point for sending the second OFDM symbol.

Alternatively, in another possible implementation, the fifth time point may be the moment at which the second node sends the start point data of the second valid data. In other words, the second node uses the moment at which the start point data of the second valid data is sent as the start time point for sending the second OFDM symbol.

For example, the fifth time point may be a moment at which the start point data of the second prefix or the start point data of the second valid data is sent from the baseband processing module in the second node. Alternatively, for example, the fifth time point may be a moment at which the start point data of the second prefix or the start point data of the second valid data is sent from the radio frequency antenna port in the second node. It may be understood that the description herein is merely an example, and does not constitute a limitation on embodiments of this application.

In addition, in a process of receiving the second measurement signal, the first node may determine the receiving start time point of the second OFDM symbol. It is assumed that the receiving start time point is referred to as a sixth time point for short.

In a possible implementation, the sixth time point serves as the moment at which the first node receives the start point data of the second prefix. In other words, the first node uses the moment at which the start point data of the second prefix is received as a start time point for receiving the second OFDM symbol.

Alternatively, in another possible implementation, the sixth time point serves as the moment at which the first node receives the start point data of the second valid data. In other words, the first node uses the moment at which the start point data of the second valid data is received as a start time point for receiving the second OFDM symbol.

For example, the sixth time point may be used as a moment at which the start point data of the second prefix or the start point data of the second valid data arrives at the baseband processing module in the first node. Alternatively, for example, the sixth time point may be used as a moment at which the start point data of the second prefix or the start point data of the second valid data arrives at the radio frequency antenna port in the first node. It may be understood that the description herein is merely an example, and does not constitute a limitation on embodiments of this application.

For example, the sixth time point is determined based on the time synchronization between the first node and the second node. Due to a synchronization error, the sixth time point is not necessarily a moment at which the first node actually receives the start point data of the second prefix or the start point data of the second valid data. For ease of understanding, for example, refer to the related description of FIG. 5. A principle is the same. Details are not described herein again.

In a possible implementation, after determining the sixth time point, the first node may start to receive the second OFDM symbol at the sixth time point, then demodulate the second OFDM symbol, and perform channel estimation on the second OFDM symbol, to obtain the CSI of each subcarrier in the OFDM symbol. For a specific implementation process, for example, refer to the related description of receiving and obtaining the CSI of each subcarrier in the first OFDM symbol by the second node after determining the second time point in step S402. A principle is the same. Details are not described herein again.

In a possible implementation, if the second measurement signal includes the plurality of OFDM symbols, the plurality of OFDM symbols are sent consecutively. The second OFDM symbol is a symbol that is first received by the first node in the plurality of OFDM symbols. A length of a prefix and a length of valid data of each OFDM symbol are fixed, or in other words, a length of a prefix and a length of valid data of each OFDM symbol are fixed, and both are specified in a protocol. Therefore, after it is determined that the start time point at which the first node receives the second OFDM symbol is the sixth time point, a receiving start time point of another symbol in the plurality of OFDM symbols can be calculated. After the receiving start time point of the another symbol is determined, the another symbol may be processed with reference to the foregoing processing process of the second OFDM symbol. Details are not described herein again.

During specific implementation, after determining the sixth time point, the first node starts to send a third measurement signal to the second node after third preset duration using the sixth time point as a start point elapses. The third measurement signal is an OFDM signal. The third measurement signal includes one or more OFDM symbols. For example, the third measurement signal may be a frame signal, for example, may be a radio frame or a super frame. It may be understood that the description herein is merely an example, and a length of the third measurement signal is not limited in embodiments of this application. The third preset duration may be the same as or different from the first preset duration. This is not limited in embodiments of this application. In addition, for description of the third preset duration, for example, refer to the foregoing description of the first preset duration. Details are not described herein again.

For example, a third OFDM symbol may be a 1^{st} OFDM symbol in the third measurement signal, that is, an OFDM symbol that is first sent in the third measurement signal. Similarly, the third OFDM symbol includes a prefix part (referred to as a third prefix for short) and a valid data part (referred to as third valid data for short). For description of the prefix, refer to the foregoing description. Details are not described herein again.

During specific implementation, a time point after the third preset duration starting from the sixth time point is referred to as a seventh time point for short. To be specific, the seventh time point is a moment at which the first node sends start point data of the third prefix.

In addition, after determining the fifth time point, the second node starts to receive the third OFDM symbol from the first node after fourth preset duration using the fifth time point as a start point elapses. A time point after the fourth preset duration starting from the fifth time point is referred to as an eighth time point for short. To be specific, the eighth time point is a moment at which the second node receives the start point data of the third prefix. For a specific implementation, for example, refer to the foregoing description of FIG. 12 or FIG. 13. A principle is the same. Details are not described herein again. The fourth preset duration may be the same as or different from the second preset duration. This is not limited in embodiments of this application. In addition, for description of the fourth preset duration, for example, refer to the foregoing description of the second preset duration. Details are not described herein again.

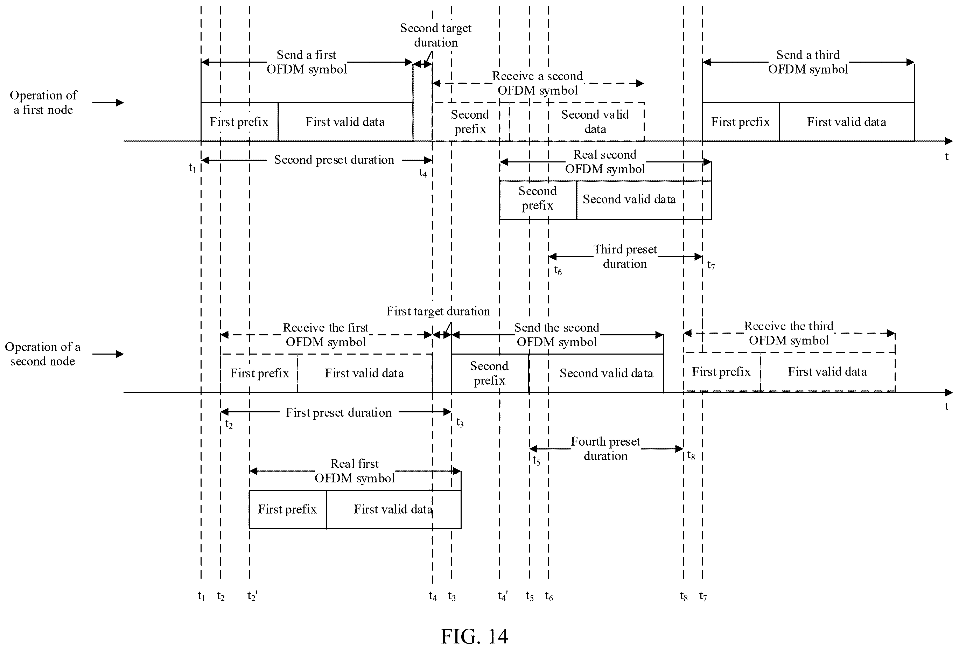

For ease of understanding the fifth time point to the eighth time point, for example, refer to FIG. 14. In FIG. 14, t₁ is the first time point, t₂ is the second time point, t₂' is the moment at which the second node actually receives the start point data of the first prefix in the first OFDM symbol, t₃ is the third time point, t₄ is the fourth time point, t₄' is the moment at which the first node actually receives the start point data of the second prefix in the second OFDM symbol, t₅ is the fifth time point, t₆ is the sixth time point, t₇ is the seventh time point, and t₈ is the eighth time point. In addition, in FIG. 14, an example in which the fifth time point is the moment at which the second node sends the start point data of the second valid data is used. In addition, an example in which the sixth time point serves as the moment at which the first node receives the start point data of the second valid data is used. It may be understood that FIG. 14 is merely an example, and does not constitute a limitation on embodiments of this application.

Based on the foregoing description, in step S404, the first node may obtain the channel estimation result (namely, the second channel estimation result) based on the received second measurement signal. In addition, the second node may obtain a channel estimation result (referred to as a third channel estimation result for short) based on the received third measurement signal. The third channel estimation result includes a CSI value obtained by the second node by performing channel estimation on each OFDM symbol included in the third measurement signal.

**In** a possible implementation, after obtaining the third channel estimation result, the second node may send the third channel estimation result to the first node, so that the first node implements ranging, angle measurement, or positioning based on the third channel estimation result and the second channel estimation result.

Alternatively, in another possible implementation, after obtaining the second channel estimation result, the first node may send the second channel estimation result to the second node, so that the second node implements ranging, angle measurement, or positioning based on the third channel estimation result and the second channel estimation result.

Alternatively, in another possible implementation, after obtaining the third channel estimation result, the second node sends the third channel estimation result to a fourth node, and after obtaining the second channel estimation result, the first node also sends the second channel estimation result to the fourth node, so that the fourth node implements ranging, angle measurement, or positioning based on the third channel estimation result and the second channel estimation result. For example, the fourth node may be, for example, a node other than the first node and the second node in the communication system.

**In** a possible implementation, it can be learned from the foregoing description that two rounds of measurement signal exchange are performed between the first node and the second node. A first round of exchange is as follows: The first node sends the first measurement signal to the second node, and the second node receives the first measurement signal and sends the second measurement signal to the first node. A second round of exchange is as follows: The second node sends the second measurement signal to the first node, and the first node receives the second measurement signal and sends the third measurement signal to the second node. Based on the foregoing description, a result of ranging, angle measurement, or positioning (referred to as a first measurement result for short) may be obtained through the first round of exchange. A result of ranging, angle measurement, or positioning (referred to as a second measurement result for short) may be obtained through the second round of exchange. In this case, the first node, the second node, or another node (for example, the third node or the fourth node) in the communication system may combine the first measurement result and the second measurement result to obtain a more accurate measurement result. For example, processing like averaging or weighted averaging may be performed on the two measurement results, so that a finally obtained measurement result is more accurate and has higher precision.

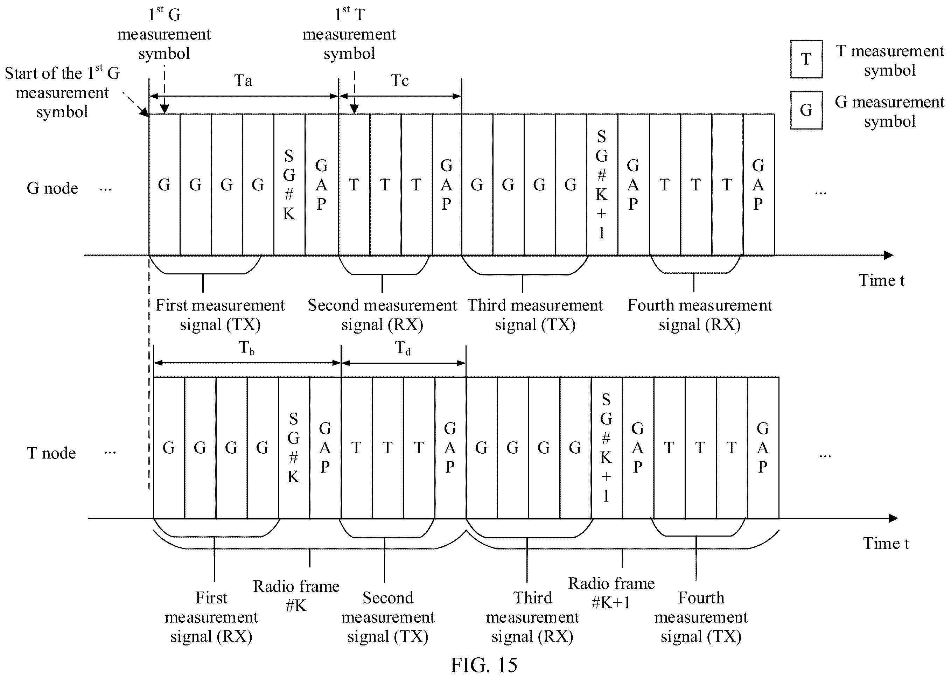

It may be understood that the foregoing uses merely results of two rounds as an example for description. During specific implementation, more than two rounds of exchange may be performed. For example, refer to FIG. 15. In FIG. 15, an example in which the first node is a G node and the second node is a T node is used. Both a G measurement symbol and a T measurement symbol are OFDM symbols. TX represents sending, and RX represents receiving. Ta, Tb, Tc, and Td are lengths of configured time domain resources. In a possible implementation, Ta is the first preset duration, Tb is the second preset duration, Tc is the third preset duration, and Td is the fourth preset duration. It can be learned from FIG. 15 that a plurality of rounds of measurement signal exchange may be performed between the G node and the T node. Therefore, a more accurate measurement result can be obtained. For details, refer to the description of the foregoing two rounds of exchange. Details are not described herein again.

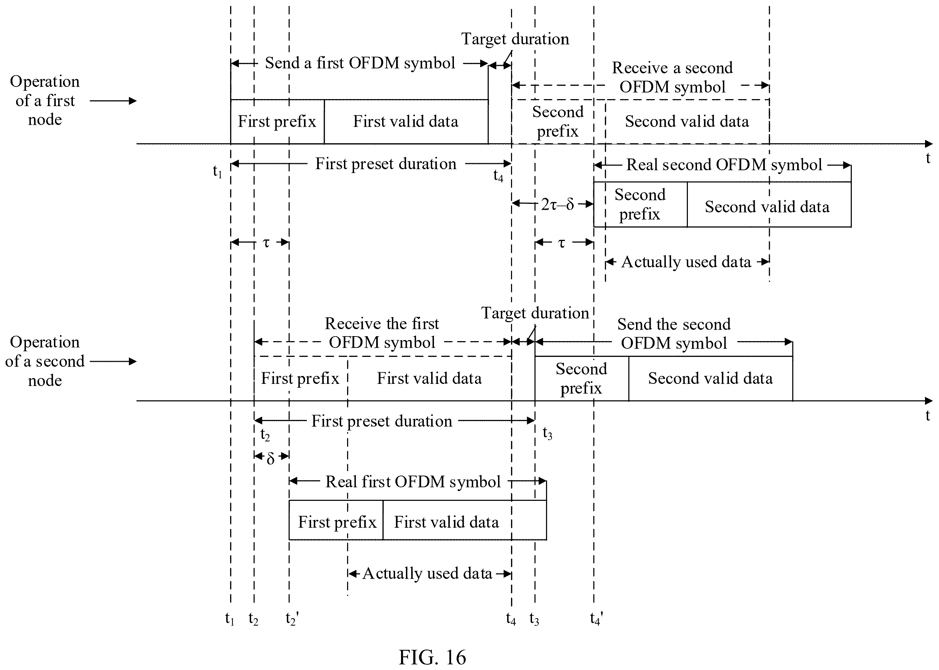

In conclusion, compared with the conventional technology in which any point in a cyclic prefix (CP) of an OFDM symbol is used as a start point of the OFDM symbol, in this solution, there is an interval of fixed duration between sending a signal by the first node and receiving a signal by the first node, the fixed duration is a time length after target preset duration starting from a start point of a sent OFDM symbol, then, a time point at which a signal starts to be received is used as a start point of a received OFDM symbol, to uniquely determine the start point of the OFDM symbol; and corresponding channel information is extracted to perform channel estimation to calculate a result of ranging or angle measurement, thereby reducing a phase offset caused by a synchronization error between a transmitter and a receiver, and improving precision of ranging, angle measurement, or positioning (a ranging result may be used for positioning). In addition, there is also an interval of the fixed duration between receiving a signal by the second node and sending a signal by the second node. In other words, a time interval between sending and receiving by the first node is the same as a time interval between receiving and sending by the second node. In addition, in the second node, the fixed duration is a time length after target preset duration starting from a start point of a received OFDM symbol, so that the first node can uniquely determine the start point of the OFDM symbol based on the fixed duration; and corresponding channel information is extracted to perform channel estimation to calculate a result of ranging or angle measurement, thereby reducing a phase offset caused by a synchronization error between a transmitter and a receiver, and improving precision of ranging, angle measurement, or positioning. For ease of understanding beneficial effects implemented in this embodiment, the following provides an example for description with reference to FIG. 16.

In FIG. 16, an example in which the measurement signal is one OFDM symbol is used. In addition, in FIG. 16, it is assumed that the first time point t₁ is a moment at which the start point data of the first prefix is sent, the second time point t₂ is a moment at which the start point data of the first prefix is received, the third time point t₃ is a moment at which the start point data of the second prefix is sent, and the fourth time point t₄ is a moment at which the start point data of the second prefix is received. The time point t₂' is a moment at which the second node actually receives the start point data of the first prefix. The time point t₄' is a moment at which the first node actually receives the start point data of the second prefix.

For example, the first time point t₁ may be used as a moment at which the start point data of the first prefix is sent from the baseband processing module in the first node. The second time point t₂ may be used as a moment at which the start point data of the first prefix arrives at the baseband processing module in the second node. The third time point t₃ may be used as a moment at which the start point data of the second prefix is sent from the baseband processing module in the second node. The fourth time point t₄ may be used as a moment at which the start point data of the second prefix arrives at the baseband processing module in the first node.

Alternatively, for example, the first time point t₁ may be used as a moment at which the start point data of the first prefix is sent from the radio frequency antenna port in the first node. The second time point t₂ may be used as a moment at which the start point data of the first prefix arrives at the radio frequency antenna port in the second node. The third time point t₃ may be used as a moment at which the start point data of the second prefix is sent from the radio frequency antenna port in the second node. The fourth time point t₄ may be used as a moment at which the start point data of the second prefix arrives at the radio frequency antenna port in the first node.

Alternatively, in another possible implementation, a transmission delay between the baseband processing module and the radio frequency antenna port in the node may be learned. Once a time point at which data is in the baseband processing module is learned, a time point at which the data is in the radio frequency antenna port can be calculated. On the contrary, once a time point at which data is in the radio frequency antenna port is learned, a time point at which the data is in the baseband processing module can be calculated. Therefore, when it is ensured that a time interval between the third time point t₃ and the second time point t₂ is equal to a time interval between the fourth time point t₄ and the first time point t₁ or a preset time interval condition is met, the time point at the baseband processing module or the radio frequency antenna port may be selected based on an actual requirement. This is not limited in embodiments of this application.

For example, in FIG. 16, first, the first node starts to send a first OFDM symbol at the first time point t₁. After performing time synchronization with the first node, the second node determines to start to receive the first OFDM symbol at the second time point t₂. Because a propagation delay of the first OFDM symbol in the air is τ, the first OFDM symbol actually starts to be transmitted to the second node from the time point t₂'. It can be learned that a time synchronization error causes a receiving time deviation (also referred to as a sampling deviation). It is assumed that the sampling deviation is δ, as shown in FIG. 16. Although there is a sampling deviation, due to existence of a prefix, complete first valid data can still be collected. Refer to an actually used data part corresponding to the first OFDM symbol in FIG. 16. Channel estimation is performed on the collected first valid data to obtain CSI (first CSI for short). In addition, the second node starts to send the second OFDM symbol to the first node after first preset duration starting from the second time point t₂ elapses, that is, starts to send the second OFDM symbol at the third time point t₃. The first node starts to receive the second OFDM symbol after the first preset duration starting from the first time point t₁ elapses, that is, starts to receive the second OFDM symbol at the fourth time point t₄. Because a propagation delay of the second OFDM symbol in the air is τ, the second OFDM symbol actually starts to be transmitted to the first node from the time point t₄'. There is also a sampling deviation between the time point t₄' and the fourth time point t₄, and the sampling deviation is 2τ-δ. Similarly, although there is a sampling deviation, due to existence of a prefix, complete second valid data can still be collected. Refer to an actually used data part corresponding to the second OFDM symbol in FIG. 16. Channel estimation is performed on the collected second valid data to obtain CSI (second CSI for short). Based on the foregoing two sampling deviations δ and 2τ-δ, after composite multiplication is performed on the first CSI and the second CSI, the sampling deviations may be reduced or even canceled. For example, ranging is used as an example. After a result of composite multiplication is input to a ranging resolving algorithm like a super-resolution algorithm, it may be estimated that a total actual time of flight (Time of flight, TOF) of the first OFDM symbol and the second OFDM symbol transmitted between the first node and the second node is 2τ. In this case, an actual time of flight of τ of one OFDM symbol transmitted between the first node and the second node may be obtained by dividing the estimation result 2τ by 2. Therefore, a distance between the first node and the second node can be calculated. It may be understood that ranging is merely used as an example herein. During specific implementation, measurement such as angle measurement may be further implemented, and a ranging result may be used to implement positioning.

Based on the foregoing description, in this embodiment, the sampling deviation between the first node and the second node caused by the synchronization error can be reduced or even canceled, thereby reducing a phase offset caused by a synchronization error between a transmitter and a receiver, and improving precision of measurement.

In a possible implementation, when the first preset duration is different from second preset duration, because the first preset duration is different from the second preset duration, the estimated measurement result has a deviation. The deviation is generally fixed, or a fluctuation can be ignored even if the deviation has the fluctuation. In view of this, measurement training may be performed in advance based on the first preset duration and the second preset duration that are different from each other, to obtain the deviation. Then, the deviation is used as a parameter of the foregoing algorithm (for example, the foregoing super-resolution algorithm) for estimating the measurement result based on a composite channel measurement. In this way, after the measurement result is obtained by the algorithm through estimation based on the composite channel measurement, the measurement result is corrected based on the deviation, to obtain an accurate measurement result with high precision. A configuration for the training needs to be consistent with a configuration of the first preset duration and the second preset duration during actual working. For ease of understanding, an example is used for description. For example, ranging is used as an example. It is assumed that the deviation obtained through the foregoing training is q meters. The ranging result obtained by the algorithm through estimation based on the composite channel measurement is L meters. In this case, a corrected measurement result obtained by correcting the measurement result based on the deviation is L-q meters. It may be understood that the description herein is merely an example. During specific implementation, the deviation may alternatively be represented by time, and a time deviation multiplied by velocity of light is a distance deviation. For example, during specific implementation, other processing like correcting a measured transmission delay may be further performed, provided that similar effect can be achieved. The description herein does not constitute a limitation on embodiments of this application.

Due to an error existing in a device or system, for example, an inherent delay of a transceiver channel (for example, including a transmission delay between a baseband processing module and a radio frequency antenna port) or a system processing delay, regardless of whether the first preset duration and the second preset duration are set to be the same (for example, the first preset duration and the second preset duration may be specified in a protocol, configured by a communication system, by default, or specified in another manner), in ranging, positioning, and angle measurement, such impact needs to be reduced or eliminated through calibration, pre-training, or the like. In some cases, the system error may be eliminated together with or separately eliminated from an error caused by the first preset duration and the second preset duration that are set to be different.

The foregoing mainly describes the communication processing method provided in embodiments of this application. It may be understood that, to implement the foregoing corresponding functions, each communication node includes a corresponding hardware structure and/or a corresponding software module for performing the functions. With reference to example units and steps described in embodiments disclosed in this specification, this application can be implemented by hardware or a combination of hardware and computer software. Whether a function is implemented by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication node may be divided into functional modules based on the foregoing method examples. For example, functional modules corresponding to the functions may be obtained through division, or two or more functions may be integrated into one module. The integrated module may be implemented in a form of hardware, or may be implemented in a form of software functional module. It should be noted that, in embodiments of this application, module division is an example, and is merely logical function division. During actual implementation, another division manner may be used.

When the functional modules corresponding to the functions are obtained through division, an embodiment of this application further provides a communication node configured to implement any one of the foregoing methods. For example, a communication node is provided, including a unit (or means) configured to implement the steps in any one of the foregoing methods.

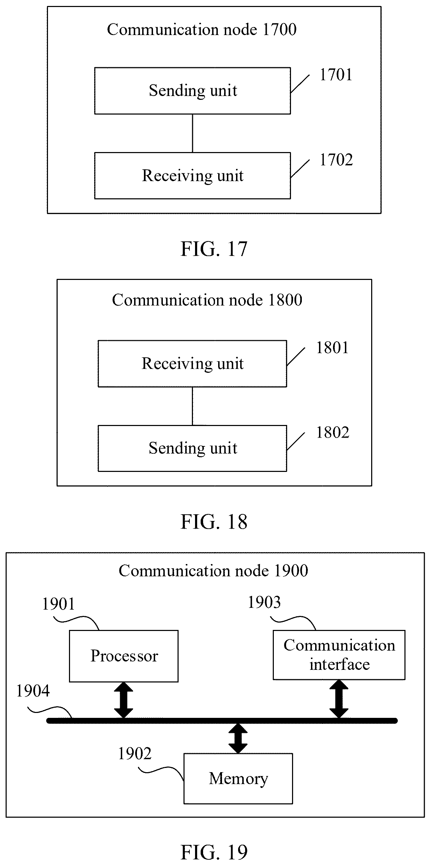

For example, FIG. 17 is a diagram of a structure of a communication node 1700 according to an embodiment of this application. The communication node 1700 may be the first node configured to implement any embodiment of the foregoing communication processing method. The communication node 1700 may include a sending unit 1701 and a receiving unit 1702.

The sending unit 1701 is configured to send a first OFDM symbol to a second node, where a sending start time point of the first OFDM symbol is a first time point. The sending unit 1701 is configured to implement the sending operation in step S401 shown in FIG. 4.

The receiving unit 1702 is configured to start to receive a second OFDM symbol from the second node at a second time point, where there is an interval of first preset duration between the second time point and the first time point, and the second time point serves as a receiving start time point at which the communication node receives the second OFDM symbol. The receiving unit 1702 is configured to implement the receiving operation in step S404 shown in FIG. 4.

The first OFDM symbol and the second OFDM symbol are used for ranging, angle measurement, or positioning.

In a possible implementation, the first OFDM symbol includes a first prefix and first valid data, where the first time point serves as a moment at which the communication node sends start point data of the first prefix, or the first time point serves as a moment at which the communication node sends start point data of the first valid data; and/or
the second OFDM symbol includes a second prefix and second valid data, where a fourth time point serves as a moment at which the communication node receives start point data of the second prefix.

In a possible implementation, the second OFDM symbol includes the second prefix and the second valid data, and the fourth time point serves as the moment at which the communication node receives the start point data of the second prefix.

The communication node further includes a collection unit configured to start to collect the second valid data after second preset duration starting from the second time point elapses, where the second preset duration is duration of a length of the second prefix.

In a possible implementation, the first OFDM symbol and the second OFDM symbol are used to obtain a measurement result of the ranging, angle measurement, or positioning, and the first preset duration is used to correct the measurement result.

In a possible implementation, the first OFDM symbol includes the first prefix and the first valid data, and the first prefix is a cyclic prefix of the first OFDM symbol, or the first prefix is the first valid data; and/or
the second OFDM symbol includes the second prefix and the second valid data, and the second prefix is a cyclic prefix of the second OFDM symbol, or the second prefix is the second valid data.

In a possible implementation, the communication node further includes a processing unit configured to: determine a channel estimation result based on the second OFDM symbol; and perform ranging, angle measurement, or positioning based on the channel estimation result.

Alternatively, after the processing unit determines the channel estimation result based on the second OFDM symbol, the sending unit 1701 is further configured to send the channel estimation result to a third node, for the third node to perform ranging, angle measurement, or positioning based on the channel estimation result.

For specific operations and beneficial effects of the units in the communication node 1700 shown in FIG. 17, refer to the corresponding descriptions in FIG. 4 and the possible embodiment of FIG. 4. Details are not described herein again.

For example, FIG. 18 is a diagram of a structure of a communication node 1800 according to an embodiment of this application. The communication node 1800 may be the second node configured to implement any embodiment of the foregoing communication processing method. The communication node 1800 may include a receiving unit 1801 and a sending unit 1802.

The receiving unit 1801 is configured to receive a first OFDM symbol from a first node, where a sending start time point that is of the first OFDM symbol and that is determined by the communication node is a first time point. The receiving unit 1801 is configured to implement the receiving operation in step S402 shown in FIG. 4.

The sending unit 1802 is configured to start to send a second OFDM symbol to the first node at a second time point, where there is an interval of first preset duration between the second time point and the first time point. The sending unit 1802 is configured to implement the sending operation in step S403 shown in FIG. 4.

The first OFDM symbol and the second OFDM symbol are used for ranging, angle measurement, or positioning.

In a possible implementation, the first OFDM symbol includes a first prefix and first valid data, where the first time point serves as a moment at which the communication node receives start point data of the first prefix, or the first time point serves as a moment at which the communication node receives start point data of the first valid data; and/or
the second OFDM symbol includes a second prefix and second valid data, where the second time point serves as a moment at which the communication node sends start point data of the second prefix.

In a possible implementation, the first OFDM symbol and the second OFDM symbol are used to obtain a measurement result of the ranging, angle measurement, or positioning, and the first preset duration is used to correct the measurement result.

In a possible implementation, a sending start time point that is of the second OFDM symbol and that is determined by the communication node is a third time point. The receiving unit 1801 is further configured to: after the sending unit 1802 starts to send the second OFDM symbol to the first node at the second time point, start to receive a third OFDM symbol from the first node at a fourth time point, where there is an interval of second preset duration between the fourth time point and the third time point, and the fourth time point serves as a receiving start time point at which the communication node receives the third OFDM symbol.

In a possible implementation, the first OFDM symbol includes the first prefix and the first valid data, and the first prefix is a cyclic prefix of the first OFDM symbol, or the first prefix is the first valid data; and
the second OFDM symbol includes the second prefix and the second valid data, and the second prefix is a cyclic prefix of the second OFDM symbol, or the second prefix is the second valid data.

In a possible implementation, the communication node further includes a processing unit configured to: determine a channel estimation result based on the first OFDM symbol; and perform ranging, angle measurement, or positioning based on the channel estimation result.

Alternatively, after the processing unit determines the channel estimation result based on the first OFDM symbol, the sending unit 1802 is further configured to send the channel estimation result to a third node, for the third node to perform ranging, angle measurement, or positioning based on the channel estimation result.

For specific operations and beneficial effects of the units in the communication node 1800 shown in FIG. 18, refer to the corresponding descriptions in FIG. 4 and the possible embodiment of FIG. 4. Details are not described herein again.

For example, FIG. 19 is a diagram of a structure of a possible physical entity of a communication node according to this application. A communication node 1900 shown in FIG. 19 may be the first node configured to implement any embodiment of the foregoing communication processing method. The communication node 1900 includes a processor 1901, a memory 1902, and a communication interface 1903. The processor 1901, the communication interface 1903, and the memory 1902 may be connected to each other or connected to each other through a bus 1904.

For example, the memory 1902 is configured to store a computer program and data of the communication node 1900. The memory 1902 may include but is not limited to a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

Software or program code required for all or a part of functions of the communication node in the foregoing method embodiments may be stored in the memory 1902.

In a possible implementation, if software or program code required for a part of the functions is stored in the memory 1902, the processor 1901, in addition to invoking the program code in the memory 1902 to implement a part of the functions, may cooperate with another component (for example, the communication interface 1903) to jointly complete another function (for example, a data receiving or sending function) described in the method embodiments.

There may be a plurality of communication interfaces 1903, configured to support the communication node 1900 in performing communication, for example, receiving or sending data or a message.

For example, the processor 1901 may be a processor, and is a circuit having a data processing capability. In an implementation, the processor may be a circuit having a capability of reading and running instructions, for example, a central processing unit (central processing unit, CPU), a microprocessor, a graphics processing unit (graphics processing unit, GPU) (may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by using an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU). Alternatively, the processor 1901 may be a combination of at least two types of these processor forms, or the like.

The processor 1901 may be configured to read the program stored in the memory 1902, to perform the operations performed by the first node in FIG. 4 and the possible embodiment of FIG. 4.

For specific operations and beneficial effects of the units in the communication node 1900 shown in FIG. 19, refer to the corresponding descriptions in FIG. 4 and the possible embodiment of FIG. 4. Details are not described herein again.

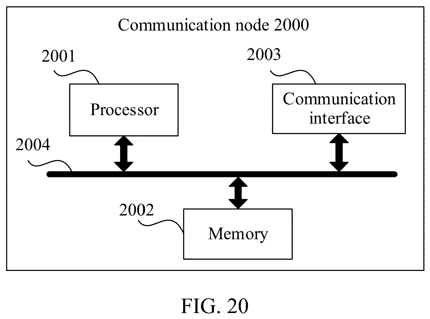

For example, FIG. 20 is a diagram of a structure of a possible physical entity of a communication node according to this application. A communication node 2000 shown in FIG. 20 may be the second node configured to implement any embodiment of the foregoing communication processing method. The communication node 2000 includes a processor 2001, a memory 2002, and a communication interface 2003. The processor 2001, the communication interface 2003, and the memory 2002 may be connected to each other or connected to each other through a bus 2004.

For example, the memory 2002 is configured to store a computer program and data of the communication node 2000. The memory 2002 may include but is not limited to a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

Software or program code required for all or a part of functions of the communication node in the foregoing method embodiments may be stored in the memory 2002.

In a possible implementation, if software or program code required for a part of the functions is stored in the memory 2002, the processor 2001, in addition to invoking the program code in the memory 2002 to implement a part of the functions, may cooperate with another component (for example, the communication interface 2003) to jointly complete another function (for example, a data receiving or sending function) described in the method embodiments.

There may be a plurality of communication interfaces 2003, configured to support the communication node 2000 in performing communication, for example, receiving or sending data or a message.

For example, the processor 2001 may be a processor, and is a circuit having a data processing capability. In an implementation, the processor may be a circuit having a capability of reading and running instructions, for example, a central processing unit (central processing unit, CPU), a microprocessor, a graphics processing unit (graphics processing unit, GPU) (may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by using an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU). Alternatively, the processor 2001 may be a combination of at least two types of these processor forms, or the like.

The processor 2001 may be configured to read the program stored in the memory 2002, to perform the operations performed by the second node in FIG. 4 and the possible embodiment of FIG. 4.

For specific operations and beneficial effects of the units in the communication node 2000 shown in FIG. 20, refer to the corresponding descriptions in FIG. 4 and the possible embodiment of FIG. 4. Details are not described herein again.

An embodiment of this application further provides a computer-readable storage medium. The computer-readable storage medium stores a computer program or computer instructions, and the computer program or the computer instructions are executed by a processor to implement the method implemented by the first node in any implementation in FIG. 4 and the possible implementations of FIG. 4.

An embodiment of this application further provides a computer-readable storage medium. The computer-readable storage medium stores a computer program or computer instructions, and the computer program or the computer instructions are executed by a processor to implement the method implemented by the second node in any implementation in FIG. 4 and the possible implementations of FIG. 4.

An embodiment of this application further provides a computer program product. When the computer program product is read and executed by a computer, the method implemented by the first node in any implementation in FIG. 4 and the possible implementations of FIG. 4 is performed.

An embodiment of this application further provides a computer program product. When the computer program product is read and executed by a computer, the method implemented by the second node in any implementation in FIG. 4 and the possible implementations of FIG. 4 is performed.

In this application, terms such as "first" and "second" are used to distinguish between same items or similar items that have basically same roles and functions. It should be understood that there is no logical or timing dependency between "first", "second", and "n^{th}", and neither a quantity nor an execution sequence is limited. It should be further understood that, although the terms such as "first" and "second" are used to describe various elements in the following description, these elements should not be limited by the terms. These terms are simply used to distinguish one element from another.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

It should be further understood that the term "include" (also referred to as "includes", "including", "comprises", and/or "comprising"), when being used in this specification, specifies presence of the stated features, integers, steps, operations, elements, and/or components, with presence or addition of one or more other features, integers, steps, operations, elements, components, and/or their combinations not excluded.

It should be further understood that "one embodiment", "an embodiment", and "a possible implementation" mentioned throughout the specification mean that specific features, structures, or characteristics related to the embodiment or the implementation are included in at least one embodiment of this application. Therefore, "in one embodiment" or "in an embodiment" or "a possible implementation" appearing throughout the specification may not necessarily refer to a same embodiment. In addition, the specific features, structures, or characteristics may be combined in one or more embodiments in any proper manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions recorded in the foregoing embodiments or make equivalent replacements to some or all technical features thereof. However, these modifications or replacements do not cause the essence of the corresponding technical solutions to depart from the scope of the technical solutions in embodiments of this application.

## Claims

1. A communication system, wherein the communication system comprises a first node and a second node, wherein
the first node is configured to send a first OFDM symbol to the second node, wherein a sending start time point of the first OFDM symbol is a first time point;
the second node is configured to receive the first OFDM symbol, wherein a receiving start time point of the first OFDM symbol is a second time point;
the second node is configured to start to send a second OFDM symbol to the first node at a third time point, wherein there is an interval of first preset duration between the third time point and the second time point;
the first node is configured to start to receive the second OFDM symbol at a fourth time point, wherein the fourth time point serves as a receiving start time point at which the first node receives the second OFDM symbol, and there is an interval of a second preset duration between the fourth time point and the first time point; and
the first OFDM symbol and the second OFDM symbol are used for ranging, angle measurement, or positioning.

2. The communication system according to claim 1, wherein the first preset duration is equal to the second preset duration.

3. The communication system according to claim 1 or 2, wherein the first OFDM symbol comprises a first prefix and first valid data, wherein
the first time point serves as a moment at which the first node sends start point data of the first prefix, or the first time point serves as a moment at which the first node sends start point data of the first valid data; and
the second time point serves as a moment at which the second node receives the start point data of the first prefix, or the second time point serves as a moment at which the second node receives the start point data of the first valid data; and/or
the second OFDM symbol comprises a second prefix and second valid data, wherein the third time point serves as a moment at which the second node sends start point data of the second prefix, and the fourth time point serves as a moment at which the first node receives the start point data of the second prefix.

4. The communication system according to any one of claims 1 to 3, wherein the second OFDM symbol comprises the second prefix and the second valid data, and the fourth time point serves as the moment at which the first node receives the start point data of the second prefix; and
after the first node is configured to start to receive the second OFDM symbol at the fourth time point, the following is further comprised:
the first node is configured to start to collect the second valid data after third preset duration starting from the fourth time point elapses, wherein the third preset duration is duration of a length of the second prefix.

5. The communication system according to any one of claims 1 to 4, wherein the first OFDM symbol comprises the first prefix and the first valid data, and the first prefix is a cyclic prefix of the first OFDM symbol, or the first prefix is the first valid data; and/or
the second OFDM symbol comprises the second prefix and the second valid data, and the second prefix is a cyclic prefix of the second OFDM symbol, or the second prefix is the second valid data.

6. The communication system according to any one of claims 1 to 5, wherein the first OFDM symbol and the second OFDM symbol are used to obtain a measurement result of the ranging, angle measurement, or positioning; and
the first preset duration and the second preset duration are used to correct the measurement result.

7. The communication system according to any one of claims 1 to 6, wherein a sending start time point that is of the second OFDM symbol and that is determined by the second node is a fifth time point, and the receiving start time point that is of the second OFDM symbol and that is determined by the first node is a sixth time point; and the following is further comprised:
the first node is configured to start to send a third OFDM symbol to the second node at a seventh time point, wherein there is an interval of fourth preset duration between the seventh time point and the sixth time point; and
the second node is configured to start to receive the third OFDM symbol at an eighth time point, wherein there is an interval of a fifth preset duration between the eighth time point and the fifth time point, wherein
the second OFDM symbol and the third OFDM symbol are used for ranging, angle measurement, or positioning.

8. The communication system according to any one of claims 1 to 7, wherein the first node is further configured to determine a first channel estimation result based on the second OFDM symbol; and
the first node is further configured to perform ranging, angle measurement, or positioning based on the first channel estimation result; or the first node is further configured to send the first channel estimation result to a third node in the communication system, for the third node to perform ranging, angle measurement, or positioning based on the first channel estimation result.

9. The communication system according to any one of claims 1 to 8, wherein the second node is further configured to determine a second channel estimation result based on the first OFDM symbol; and
the second node is further configured to perform ranging, angle measurement, or positioning based on the second channel estimation result; or the second node is further configured to send the second channel estimation result to a fourth node in the communication system, for the fourth node to perform ranging, angle measurement, or positioning based on the second channel estimation result.

10. A communication processing method, wherein the method comprises:
sending, by a first node, a first OFDM symbol to a second node, wherein a sending start time point of the first OFDM symbol is a first time point; and
starting, by the first node, to receive a second OFDM symbol from the second node at a second time point, wherein there is an interval of first preset duration between the second time point and the first time point, and the second time point serves as a receiving start time point at which the first node receives the second OFDM symbol, wherein
the first OFDM symbol and the second OFDM symbol are used for ranging, angle measurement, or positioning.

11. The method according to claim 9, wherein the first OFDM symbol comprises a first prefix and first valid data, wherein the first time point serves as a moment at which the first node sends start point data of the first prefix, or the first time point serves as a moment at which the first node sends start point data of the first valid data; and/or
the second OFDM symbol comprises a second prefix and second valid data, wherein a fourth time point serves as a moment at which the first node receives start point data of the second prefix.

12. The method according to claim 10 or 11, wherein the second OFDM symbol comprises the second prefix and the second valid data, and the fourth time point serves as the moment at which the first node receives the start point data of the second prefix; and
after starting, by the first node, to receive the second OFDM symbol from the second node at the second time point, the method further comprises:
starting, by the first node, to collect the second valid data after second preset duration starting from the second time point elapses, wherein the second preset duration is duration of a length of the second prefix.

13. The method according to any one of claims 10 to 12, wherein the first OFDM symbol comprises the first prefix and the first valid data, and the first prefix is a cyclic prefix of the first OFDM symbol, or the first prefix is the first valid data; and/or
the second OFDM symbol comprises the second prefix and the second valid data, and the second prefix is a cyclic prefix of the second OFDM symbol, or the second prefix is the second valid data.

14. The method according to any one of claims 10 to 13, wherein the first OFDM symbol and the second OFDM symbol are used to obtain a measurement result of the ranging, angle measurement, or positioning; and
the first preset duration is used to correct the measurement result.

15. The method according to any one of claims 10 to 14, wherein the method further comprises: determining, by the first node, a channel estimation result based on the second OFDM symbol; and
performing, by the first node, ranging, angle measurement, or positioning based on the channel estimation result; or sending, by the first node, the channel estimation result to a third node, for the third node to perform ranging, angle measurement, or positioning based on the channel estimation result.

16. A communication processing method, wherein the method comprises:
receiving, by a second node, a first OFDM symbol from a first node, wherein a sending start time point that is of the first OFDM symbol and that is determined by the second node is a first time point; and
starting, by the second node, to send a second OFDM symbol to the first node at a second time point, wherein there is an interval of first preset duration between the second time point and the first time point, wherein
the first OFDM symbol and the second OFDM symbol are used for ranging, angle measurement, or positioning.

17. The method according to claim 16, wherein the first OFDM symbol comprises a first prefix and first valid data, wherein the first time point serves as a moment at which the second node receives start point data of the first prefix, or the first time point serves as a moment at which the second node receives start point data of the first valid data; and/or
the second OFDM symbol comprises a second prefix and second valid data, wherein the second time point serves as a moment at which the second node sends start point data of the second prefix.

18. The method according to claim 16 or 17, wherein the first OFDM symbol and the second OFDM symbol are used to obtain a measurement result of the ranging, angle measurement, or positioning; and
the first preset duration is used to correct the measurement result.

19. The method according to claim 17 or 18, wherein a sending start time point that is of the second OFDM symbol and that is determined by the second node is a third time point; and after starting, by the second node, to send the second OFDM symbol to the first node at the second time point, the method further comprises:
starting, by the second node, to receive a third OFDM symbol from the first node at a fourth time point, wherein there is an interval of second preset duration between the fourth time point and the third time point, and the fourth time point serves as a receiving start time point at which the second node receives the third OFDM symbol.

20. The method according to any one of claims 16 to 19, wherein the first OFDM symbol comprises the first prefix and the first valid data, and the first prefix is a cyclic prefix of the first OFDM symbol, or the first prefix is the first valid data; and
the second OFDM symbol comprises the second prefix and the second valid data, and the second prefix is a cyclic prefix of the second OFDM symbol, or the second prefix is the second valid data.

21. The method according to any one of claims 16 to 20, wherein the method further comprises: determining, by the second node, a channel estimation result based on the first OFDM symbol; and
performing, by the second node, ranging, angle measurement, or positioning based on the channel estimation result; or sending, by the second node, the channel estimation result to a third node, for the third node to perform ranging, angle measurement, or positioning based on the channel estimation result.

22. A communication node, wherein the communication node comprises:
a sending unit, configured to send a first OFDM symbol to a second node, wherein a sending start time point of the first OFDM symbol is a first time point; and
a receiving unit, configured to start to receive a second OFDM symbol from the second node at a second time point, wherein there is an interval of first preset duration between the second time point and the first time point, and the second time point serves as a receiving start time point at which the communication node receives the second OFDM symbol, wherein
the first OFDM symbol and the second OFDM symbol are used for ranging, angle measurement, or positioning.

23. The communication node according to claim 22, wherein the first OFDM symbol comprises a first prefix and first valid data, wherein the first time point serves as a moment at which the communication node sends start point data of the first prefix, or the first time point serves as a moment at which the communication node sends start point data of the first valid data; and/or
the second OFDM symbol comprises a second prefix and second valid data, wherein the fourth time point serves as a moment at which the communication node receives start point data of the second prefix.

24. The communication node according to claim 22 or 23, wherein the second OFDM symbol comprises the second prefix and the second valid data, and the fourth time point serves as the moment at which the communication node receives the start point data of the second prefix; and
the communication node further comprises a collection unit configured to start to collect the second valid data after second preset duration starting from the second time point elapses, wherein the second preset duration is duration of a length of the second prefix.

25. The communication node according to any one of claims 22 to 24, wherein the first OFDM symbol comprises the first prefix and the first valid data, and the first prefix is a cyclic prefix of the first OFDM symbol, or the first prefix is the first valid data; and/or
the second OFDM symbol comprises the second prefix and the second valid data, and the second prefix is a cyclic prefix of the second OFDM symbol, or the second prefix is the second valid data.

26. The communication node according to any one of claims 22 to 25, wherein the first OFDM symbol and the second OFDM symbol are used to obtain a measurement result of the ranging, angle measurement, or positioning; and
the first preset duration is used to correct the measurement result.

27. The communication node according to any one of claims 22 to 26, wherein the communication node further comprises a processing unit configured to: determine a channel estimation result based on the second OFDM symbol; and perform ranging, angle measurement, or positioning based on the channel estimation result; or
after the processing unit determines the channel estimation result based on the second OFDM symbol, the sending unit is further configured to send the channel estimation result to a third node, for the third node to perform ranging, angle measurement, or positioning based on the channel estimation result.

28. A communication node, wherein the communication node comprises:
a receiving unit, configured to receive a first OFDM symbol from a first node, wherein a sending start time point that is of the first OFDM symbol and that is determined by the communication node is a first time point; and
a sending unit, configured to start to send a second OFDM symbol to the first node at a second time point, wherein there is an interval of first preset duration between the second time point and the first time point, wherein
the first OFDM symbol and the second OFDM symbol are used for ranging, angle measurement, or positioning.

29. The communication node according to claim 28, wherein the first OFDM symbol comprises a first prefix and first valid data, wherein the first time point serves as a moment at which the communication node receives start point data of the first prefix, or the first time point serves as a moment at which the communication node receives start point data of the first valid data; and/or
the second OFDM symbol comprises a second prefix and second valid data, wherein the second time point serves as a moment at which the communication node sends start point data of the second prefix.

30. The communication node according to claim 28 or 29, wherein a sending start time point that is of the second OFDM symbol and that is determined by the communication node is a third time point; and
the receiving unit is further configured to: after the sending unit starts to send the second OFDM symbol to the first node at the second time point, start to receive a third OFDM symbol from the first node at a fourth time point, wherein there is an interval of second preset duration between the fourth time point and the third time point, and the fourth time point serves as a receiving start time point at which the communication node receives the third OFDM symbol.

31. The communication node according to any one of claims 28 to 30, wherein the first OFDM symbol and the second OFDM symbol are used to obtain a measurement result of the ranging, angle measurement, or positioning; and
the first preset duration is used to correct the measurement result.

32. The communication node according to any one of claims 28 to 31, wherein the first OFDM symbol comprises the first prefix and the first valid data, and the first prefix is a cyclic prefix of the first OFDM symbol, or the first prefix is the first valid data; and
the second OFDM symbol comprises the second prefix and the second valid data, and the second prefix is a cyclic prefix of the second OFDM symbol, or the second prefix is the second valid data.

33. The communication node according to any one of claims 28 to 32, wherein the communication node further comprises a processing unit configured to: determine a channel estimation result based on the first OFDM symbol; and perform ranging, angle measurement, or positioning based on the channel estimation result; or
after the processing unit determines the channel estimation result based on the first OFDM symbol, the sending unit is further configured to send the channel estimation result to a third node, for the third node to perform ranging, angle measurement, or positioning based on the channel estimation result.

34. A communication node, wherein the communication node comprises a processor, a communication interface, and a memory, the communication interface is configured to implement data receiving and sending, the memory is configured to store a computer program or computer instructions, and the processor is configured to execute the computer program or the computer instructions stored in the memory, to enable the communication node to perform the method according to any one of claims 10 to 15.

35. A communication node, wherein the communication node comprises a processor, a communication interface, and a memory, the communication interface is configured to implement data receiving and sending, the memory is configured to store a computer program or computer instructions, and the processor is configured to execute the computer program or the computer instructions stored in the memory, to enable the communication node to perform the method according to any one of claims 16 to 21.

36. A computer-readable storage medium, wherein the computer-readable storage medium stores a computer program or computer instructions, and the computer program or the computer instructions are executed by a processor to implement the method according to any one of claims 10 to 15; or
the computer program or the computer instructions are executed by a processor to implement the method according to any one of claims 16 to 21.

37. A computer program product, wherein when the computer program product is executed by a processor, the method according to any one of claims 10 to 15 is implemented; or
when the computer program product is executed by a processor, the method according to any one of claims 16 to 21 is implemented.
